# EUROPEAN PATENT SPECIFICATION

(11) **EP 3 943 718 B1**
(45) Date of publication and mention of the grant of the patent: **18.10.2023**
(21) Application number: 20787764.8
(22) Date of filing: 06.04.2020
(51) Int. Cl.: F01M 1/06, F02F 7/00, F16H 9/18, F01M 11/00, B62M 9/08, F16H 57/02, F16H 57/029, F16H 57/04, F16H 63/06, F01M 11/02

(54) **ENGINE UNIT**
MOTOREINHEIT
UNITÉ DE MOTEUR

(30) Priority: 12.04.2019 JP 2019076077
(43) Date of publication of application: 26.01.2022
(73) Proprietor: YAMAHA HATSUDOKI KABUSHIKI KAISHA, Iwata-shi Shizuoka 438-8501 (JP)
(72) Inventor: MURAYAMA, Takuji, Iwata-shi, Shizuoka 438-8501 (JP)
(74) Representative: Stöckeler, Ferdinand
(86) International application number: PCT/JP2020/015464
(87) International publication number: WO 2020/209214

(56) References cited:
- EP-A1- 1 956 269
- EP-A1- 3 412 932
- EP-A1- 3 421 839
- WO-A1-2017/135320
- JP-A- 2009 191 941
- JP-U- H0 369 737

## Description

### [Technical Field]

The present teaching relates to an engine unit including an electronically-controlled continuously variable transmission (ECVT).

### [Background Art]

An engine unit including an electronically-controlled continuously variable transmission has been known, see for example EP3412932A1. Also, an electronically-controlled continuously variable transmission using a dry belt has been known. The electronically-controlled continuously variable transmission using the dry belt includes a primary pulley, a secondary pulley, the dry belt, and a primary movable sheave movement mechanism. The dry belt is wound onto the primary pulley and the secondary pulley. The primary pulley is attached to a primary shaft member. The primary pulley rotates as rotational force of a crankshaft is transmitted thereto via the primary shaft member. The secondary pulley is attached to a secondary shaft member. The secondary pulley rotates in accordance with the rotation of the primary pulley, and transmits rotational force to a driving wheel through the secondary shaft member. The primary pulley includes at least one primary movable sheave. The primary movable sheave movement mechanism includes an electric motor and moves the at least one primary movable sheave in a rotational axis direction of the primary shaft member relative to the primary shaft member. The primary movable sheave movement mechanism continuously nvaries the wound diameter of the dry belt wound onto the primary pulley.

The dry belt is made of a non-metal material such as rubber and synthetic resin. The dry belt easily deteriorates by heat. Under this circumstance, prevention of thermal deterioration of the dry belt of the electronically-controlled continuously variable transmission has been desired. In order to suppress thermal deterioration of the dry belt of the electronically-controlled continuously variable transmission, it is preferable to decrease the temperature around the sheave on which the dry belt is wound. Patent Literature 1 proposes a structure that suppresses thermal deterioration of a dry belt by cooling a primary pulley of a primary movable sheave. To be more specific, in the electronically-controlled continuously variable transmission using the dry belt of Patent Literature 1, the primary pulley is cooled by a large number of fins formed on the outside surface of the primary movable sheave.

### [Citation List]

### [Patent Literatures]

[Patent Literature 1] Japanese Unexamined Patent Publication No. 2007-10105

### [Summary of Invention]

### [Technical Problem]

It is desired to provide an engine unit including an electronically-controlled continuously variable transmission using a dry belt, which is able to suppress thermal deterioration of the dry belt by a structure different from the structure in which a large number of fins are formed on the outside surface of the primary movable sheave recited in Patent Literature 1.

An object of the present teaching is to provide an engine unit including an electronically-controlled continuously variable transmission using a dry belt, which is able to prevent thermal deterioration of the dry belt.

### [Solution to Problem]

The inventors of the subject application researched a cause of thermal deterioration of a dry belt in a known engine unit including an electronically-controlled continuously variable transmission using the dry belt. The inventors of the subject application found that, depending on a driving condition, the temperature of a slide portion between a primary movable sheave and a primary shaft member was high. The primary movable sheave is attached so as to be movable relative to the primary shaft member in the rotational axis direction of the primary shaft member. As a result of further research, the inventors of the subject application found that heat was generated depending on a friction state of a slide portion between the primary movable sheave and the primary shaft member, where sliding occurred when the primary movable sheave moved relative to the primary shaft member in the rotational axis direction of the primary shaft member. The inventors of the subject application found that increase in temperature of the slide portion between the primary movable sheave and the primary shaft member was suppressed by stabilizing the friction state of the slide portion between the primary movable sheave and the primary shaft member. The inventors of the subject application found that the friction state of the slide portion between the primary movable sheave and the primary shaft member was stabilized by forming a lubrication chamber in which the slide portion between the primary movable sheave and the primary shaft member was accommodated and lubricating the slide portion accommodated in the lubrication chamber by lubricant.

In connection with the above, contact portions where the dry belt makes contact with the primary pulley and the secondary pulley are not lubricated by lubricant. In other words, the contact portion between the primary pulley and the dry belt, the contact portion between the secondary pulley and the dry belt, and the dry belt are provided in a dry space formed in a dry belt casing. Meanwhile, the slide portion between the primary movable sheave and the primary shaft member is provided in a lubrication chamber formed by a lubrication chamber forming portion surrounding the slide portion. In order to lubricate the slide portion between the primary movable sheave and the primary shaft member, the inventors of the subject application found that, in the lubrication chamber forming portion, an inlet for injecting lubricant and an outlet for discharging the lubricant are provided separately. With this arrangement, the lubricant is injected through the inlet into the lubrication chamber formed by the lubrication chamber forming portion and the lubricant is discharged from the lubrication chamber through the outlet. To put it differently, the lubricant circulates between the lubrication chamber and the outside of the lubrication chamber. As the lubricant circulates between the lubrication chamber formed by the lubrication chamber forming portion and the outside of the lubrication chamber, lubrication of the slide portion between the primary movable sheave and the primary shaft member is facilitated. On this account, the slide portion between the primary movable sheave and the primary shaft member is lubricated, the friction state of the slide portion between the primary movable sheave and the primary shaft member is stabilized, and hence generation of heat due to friction is suppressed. Furthermore, because the lubricant circulates between the lubrication chamber formed by the lubrication chamber forming portion and the outside of the lubrication chamber, it is possible to suppress heat from being accumulated in the lubrication chamber in which the slide portion between the primary movable sheave and the primary shaft member is accommodated. In this way, thermal deterioration of the dry belt is prevented in the electronically-controlled continuously variable transmission using the dry belt.

(1) An engine unit of the present teaching comprises: an engine main body unit which includes a crankcase member forming a lubrication space in which lubricant exists and a crankshaft member provided in the lubrication space; and an electronically-controlled continuously variable transmission which includes: (A) a primary pulley which is attached to a primary shaft member to which power of the crankshaft member is transmitted, is rotatable in accordance with rotation of the crankshaft member, and includes a primary movable sheave movable in a rotational axis direction and a sheave movable or immovable in the rotational axis direction; (B) a secondary pulley which is attached to a secondary shaft member and rotates together with the secondary shaft member; (C) a dry belt which is wound onto the primary pulley and the secondary pulley and has contact portions where the dry belt is in contact with the primary pulley and the secondary pulley, the contact portions not being lubricated by the lubricant; (D) a dry belt casing which forms a dry space in which the primary pulley, the secondary pulley, and the dry belt are provided; and (E) a primary movable sheave movement mechanism which includes an electric motor and is configured to move the primary movable sheave relative to the primary shaft member in the rotational axis direction of the primary shaft member, by using rotational force of the electric motor, the primary movable sheave movement mechanism including a lubrication chamber forming portion that forms a lubrication chamber accommodating a slide portion between the primary movable sheave and the primary shaft member, which is a portion where the primary movable sheave and the primary shaft member slide with each other when the primary movable sheave is moved by the primary movable sheave movement mechanism in the rotational axis direction of the primary shaft member relative to the primary shaft member, and the lubrication chamber forming portion having a lubricant injection hole that allows the lubricant to be injected into the lubrication chamber in order to lubricate the slide portion and a lubricant discharge hole that allows the lubricant to be discharged from the lubrication chamber.

According to this arrangement, the primary movable sheave movement mechanism includes the lubrication chamber forming portion forming the lubrication chamber accommodating the slide portion between the primary shaft member and the primary movable sheave. The slide portion between the primary movable sheave and the primary shaft member is a portion where the primary movable sheave and the primary shaft member slide with each other when the primary movable sheave is moved by the primary movable sheave movement mechanism relative to the primary shaft member in the rotational axis direction of the primary shaft member. To put it differently, the slide portion between the primary shaft member and the primary movable sheave is a portion where the primary shaft member and the primary movable sheave directly make contact with each other and slide with each other when the primary movable sheave moves in the rotational axis direction of the primary shaft member relative to the primary shaft member. The lubrication chamber forming portion has the lubricant injection hole and the lubricant discharge hole. The lubricant injection hole is arranged to allow the lubricant to be injected into the lubrication chamber in order to lubricate the slide portion between the primary movable sheave and the primary shaft member. The lubricant discharge hole allows the lubricant to be discharged from the lubrication chamber. In this way, the lubricant is injected in the lubrication chamber though the lubricant injection hole and the lubricant in the lubrication chamber is discharged through the lubricant discharge hole. Heat generated at the slide portion between the primary movable sheave and the primary shaft member is therefore absorbed by the lubricant in the lubrication chamber and is discharged to the outside of the lubrication chamber together with the lubricant. This makes it possible to prevent increase in temperature of the slide portion between the primary movable sheave and the primary shaft member. Furthermore, the slide portion between the primary movable sheave and the primary shaft member is lubricated by a large amount of lubricant. As a result, a friction state of the slide portion between the primary movable sheave and the primary shaft member accommodated in the lubrication chamber is stabilized and frictional heat is suppressed. The temperature around the primary pulley is therefore decreased, and thermal deterioration of the dry belt is suppressed. The lubricant in the lubrication chamber may lubricate a slide portion which is different from the slide portion between the primary movable sheave and the primary shaft member and is a portion where the primary movable sheave and the primary shaft member slide with each other when the primary movable sheave moves in the rotational axis direction of the primary shaft member relative to the primary shaft member. This slide portion is a portion that is not directly in contact with either the primary shaft member or the primary movable sheave, and is a portion where the primary shaft member and the primary movable sheave indirectly make contact with each other through another member and slide with each other. To be more specific, this slide portion is a portion where members that are provided between the primary shaft member and the primary movable sheave and constitute the lubrication chamber forming portion directly make contact with each other and slide with each other when the primary movable sheave moves in the rotational axis direction of the primary shaft member relative to the primary shaft member.

(2) According to another aspect of the present teaching, the engine unit of the present teaching preferably includes the following arrangement, in addition to the arrangement (1).

The lubrication chamber forming portion is provided inside the lubrication space formed by the crankcase member, and the lubricant injected into the lubrication chamber is identical with the lubricant existing in the lubrication space formed by the crankcase member.

With this arrangement, an amount of the lubricant in the lubrication space formed by the crankcase member is large. It is therefore possible to inject, into the lubrication chamber in which the slide portion between the primary movable sheave and the primary shaft member is accommodated, a larger amount of lubricant existing in the lubrication space formed by the crankcase member. With this arrangement, heat generated at the slide portion between the primary movable sheave and the primary shaft member is absorbed more by the lubricant in the lubrication chamber and is discharged more to the outside of the lubrication chamber together with the lubricant. This makes it possible to further prevent increase in temperature of the slide portion between the primary movable sheave and the primary shaft member. Furthermore, the slide portion between the primary movable sheave and the primary shaft member is lubricated by a larger amount of lubricant. As a result, a friction state of the slide portion between the primary movable sheave and the primary shaft member accommodated in the lubrication chamber is further stabilized and frictional heat is further suppressed. The temperature around the primary pulley is therefore decreased, and thermal deterioration of the dry belt is suppressed.

(3) According to another aspect of the present teaching, the engine unit of the present teaching preferably includes the following arrangement, in addition to the arrangement (2).

The engine unit comprises a lubricant injector which is configured to either inject the lubricant toward the lubricant injection hole or inject the lubricant such that the lubricant collides with a wall surface of the crankcase member so as to be supplied to the lubricant injection hole.

According to this arrangement, the lubricant injector makes it possible to reliably inject lubricant into the lubrication chamber in which the slide portion between the primary movable sheave and the primary shaft member is accommodated. In this case, the position of the lubricant injection hole relative to the primary shaft member is preferably fixed. With this arrangement, heat generated at the slide portion between the primary movable sheave and the primary shaft member is reliably absorbed by the lubricant in the lubrication chamber and is reliably discharged to the outside of the lubrication chamber together with the lubricant. This makes it possible to further prevent increase in temperature of the slide portion between the primary movable sheave and the primary shaft member. Furthermore, the slide portion between the primary movable sheave and the primary shaft member is further reliably lubricated by the lubricant. As a result, a friction state of the slide portion between the primary movable sheave and the primary shaft member accommodated in the lubrication chamber is further stabilized and frictional heat is further suppressed. The temperature around the primary pulley is therefore decreased, and thermal deterioration of the dry belt is suppressed.

(4) According to another aspect of the present teaching, the engine unit of the present teaching preferably includes the following arrangement, in addition to the arrangement (2) or (3).

The lubricant injection hole is provided at an upper portion of the lubrication chamber forming portion.

According to this arrangement, the lubricant flows downward in the vertical direction by the force of gravity. Because the lubricant injection hole is formed in the upper portion of the lubrication chamber forming portion in a state of use of the engine unit, injection of the lubricant into the lubrication chamber is facilitated. In this case, the position of the lubricant injection hole relative to the primary shaft member is preferably fixed. The temperature around the primary pulley is therefore decreased, and thermal deterioration of the dry belt is suppressed.

In the present teaching, the upper portion of the lubricant chamber forming portion indicates the upper portion of the lubrication chamber forming portion in a state of use of the engine unit. When a vehicle on which the engine unit is mounted is varied in the vehicle left-right direction or in the vehicle front-rear direction, the upper portion may be an upper portion of the lubrication chamber forming portion in a particular state of use of the engine unit.

(5) According to another aspect of the present teaching, the engine unit of the present teaching preferably includes the following arrangement, in addition to the arrangement (4).

The lubricant injection hole is arranged so that an open end formed in an outer surface of the lubrication chamber forming portion is larger in size than an open end formed in an inner surface of the lubrication chamber forming portion.

According to this arrangement, the open end formed in the outer surface of the lubrication chamber forming portion of the lubricant injection hole is larger in size than the open end formed in the inner surface of the lubrication chamber forming portion of the lubricant injection hole. Injection of the lubricant into the lubrication chamber is further facilitated by this arrangement. The temperature around the primary pulley is therefore decreased, and thermal deterioration of the dry belt is suppressed.

(6) According to another aspect of the present teaching, the engine unit of the present teaching preferably includes the following arrangement, in addition to the arrangement (2).

The lubricant injection hole is formed to connect the inside of the primary shaft member with the lubrication chamber.

According to this arrangement, the lubricant injection hole formed to connect the inside of the primary shaft member with the lubrication chamber makes it possible to reliably inject lubricant into the lubrication chamber in which the slide portion between the primary movable sheave and the primary shaft member is accommodated. With this arrangement, heat generated at the slide portion between the primary movable sheave and the primary shaft member is reliably absorbed by the lubricant in the lubrication chamber and is reliably discharged to the outside of the lubrication chamber together with the lubricant. This makes it possible to further prevent increase in temperature of the slide portion between the primary movable sheave and the primary shaft member. Furthermore, the slide portion between the primary movable sheave and the primary shaft member is further reliably lubricated by the lubricant. As a result, a friction state of the slide portion between the primary movable sheave and the primary shaft member accommodated in the lubrication chamber is further stabilized and frictional heat is further suppressed. The temperature around the primary pulley is therefore decreased, and thermal deterioration of the dry belt is suppressed.

(7) According to another aspect of the present teaching, the engine unit of the present teaching preferably includes the following arrangement, in addition to any one of the arrangements (3) to (6). The lubricant injection hole is formed to have a central axial line extending along a radial direction of the primary shaft member.

According to this arrangement, the lubricant injection hole is formed so that the central axial line of the lubricant injection hole extends along the radial direction of the primary shaft member. In this regard, the primary movable sheave is moved by the primary movable sheave movement mechanism in the rotational axis direction of the primary shaft member relative to the primary shaft member. The lubrication chamber formed by the lubrication chamber forming portion is therefore varied in the rotational axis direction of the primary shaft member. Because the lubrication chamber is varied in the rotational axis direction of the primary shaft member and is less likely to be varied in the radial direction, it is difficult to inject lubricant into the lubrication chamber when, for example, the lubricant injection hole is formed so that its central axial line extends along the rotational axis direction of the primary shaft member. Meanwhile, injection of the lubricant into the lubrication chamber is facilitated when the lubricant injection hole is formed so that its central axial line extends along the radial direction of the primary shaft member. The temperature around the primary pulley is therefore decreased, and thermal deterioration of the dry belt is suppressed.

In the present teaching, the central axial line of the lubricant injection hole is the center of the lubricant injection hole when the hole is circular in cross section and is substantially the center of the lubricant injection hole when the hole is non-circular in cross section. When the central axial line of the lubricant injection hole includes central axial lines extending in plural directions, the central axial line of the lubricant injection hole indicates the central axial line of an open end of the lubricant injection hole, which is formed in the inner surface of the lubrication chamber forming portion. The lubricant injection hole is formed so that its central axial line passes through the center line of the primary shaft member. The inner surface of the lubrication chamber forming portion is a surface exposed to the lubrication chamber of the lubrication chamber forming portion.

The lubricant injection hole may be provided so that its central axial line extends along the vertical direction. In this regard, the lubricant flows downward in the vertical direction by the force of gravity. Injection of the lubricant into the lubrication chamber is further facilitated when the lubricant injection hole is formed so that its central axial line extends along the vertical direction. The temperature around the primary pulley is therefore decreased, and thermal deterioration of the dry belt is suppressed.

In the present teaching, the vertical direction indicates the vertical direction when the engine unit is in a state of use. When a vehicle on which the engine unit is mounted is tilted in the vehicle left-right direction or in the vehicle front-rear direction, the vertical direction may be the vertical direction in a particular state of use of the engine unit.

(8) According to another aspect of the present teaching, the engine unit of the present teaching preferably includes the following arrangement, in addition to any one of the arrangements (3) to (7). The lubrication chamber forming portion includes a bearing attached to the primary shaft member, the bearing includes a cylindrical inner race attached to the primary shaft member, a cylindrical outer race provided outside the inner race in the radial direction, and rolling bodies provided between the inner race and the outer race, a seal plate being provided on none of surfaces of the bearing in the rotational axis direction of the primary shaft member, and the lubricant discharge hole is an internal gap formed between the rolling bodies and the inner race and between the rolling bodies and the outer race in the bearing.

According to this arrangement, the lubrication chamber forming portion includes the bearing attached to the primary shaft member. The lubricant discharge hole is the internal gap in the bearing, which is formed between the moving bodies and the inner race and between the moving bodies and the outer race. This simple arrangement allows the lubricant to be discharged from the lubrication chamber. The temperature around the primary pulley is therefore decreased, and thermal deterioration of the dry belt is suppressed.

(9) According to another aspect of the present teaching, the engine unit of the present teaching preferably includes the following arrangement, in addition to the arrangement (2) or (3).

The lubricant discharge hole is provided at a lower portion of the lubrication chamber forming portion.

According to this arrangement, the lubricant flows downward in the vertical direction by the force of gravity. Because the lubricant discharge hole is at least partially formed in the lower portion of the lubrication chamber forming portion in a state of use of the engine unit, discharge of the lubricant from the lubrication chamber is facilitated. In this case, the position of the lubricant discharge hole relative to the primary shaft member is preferably fixed. The temperature around the primary pulley is therefore decreased, and thermal deterioration of the dry belt is suppressed.

In the present teaching, the lower portion of the lubricant chamber forming portion indicates the lower portion of the lubrication chamber forming portion in a state of use of the engine unit. When a vehicle on which the engine unit is mounted is varied in the vehicle left-right direction or in the vehicle front-rear direction, the lower portion may be a lower portion of the lubrication chamber forming portion in a particular state of use of the engine unit.

(10) According to another aspect of the present teaching, the engine unit of the present teaching preferably includes the following arrangement, in addition to the arrangement (9).

The lubricant discharge hole is formed to have a central axial line extending along a vertical direction.

According to this arrangement, the lubricant flows downward in the vertical direction by the force of gravity. Discharge of the lubricant from the lubrication chamber is further facilitated when the lubricant discharge hole is formed so that its central axial line extends along the vertical direction. The temperature around the primary pulley is therefore decreased, and thermal deterioration of the dry belt is suppressed.

In the present teaching, the central axial line of the lubricant discharge hole is the center of the lubricant discharge hole when the hole is circular in cross section and is substantially the center of the lubricant discharge hole when the hole is non-circular in cross section. When the central axial line of the lubricant discharge hole includes central axial lines extending in plural directions, the central axial line of the lubricant discharge hole indicates the central axial line of an open end of the lubricant discharge hole, which is formed in the inner surface of the lubrication chamber forming portion.

(11) According to another aspect of the present teaching, the engine unit of the present teaching preferably includes the following arrangement, in addition to the arrangement (9).

The engine unit according to claim 6, wherein the lubricant discharge hole is formed to have a central axial line not extending along a vertical direction.

According to this arrangement, the lubricant flows downward in the vertical direction by the force of gravity. Because the lubricant discharge hole is formed so that the central axial line of the lubricant discharge hole does not extend in the vertical direction, the lubricant is accumulated at the lower portion of the lubrication chamber while the lubricant is discharged from the lubrication chamber. As the lubricant is accumulated at the lower portion of the lubrication chamber, the lubrication of the slide portion between the primary movable sheave and the primary shaft member, which is accommodated in the lubrication chamber, is ensured, with the result that the friction state of the slide portion is stabilized. As a result, heat generation by friction at the slide portion between the primary movable sheave and the primary shaft member is suppressed. The temperature around the primary pulley is therefore decreased, and thermal deterioration of the dry belt is suppressed.

(12) According to another aspect of the present teaching, the engine unit of the present teaching preferably includes the following arrangement, in addition to any one of the arrangements (9) to (11). The lubricant discharge hole is arranged so that an open end formed in an outer surface of the lubrication chamber forming portion is identical in size with an open end formed in an inner surface of the lubrication chamber forming portion.

According to this arrangement, the open end of the lubricant discharge hole, which is formed in the inner surface of the lubrication chamber forming portion, is identical in size with the open end of the lubricant discharge hole, which is formed in the outer surface of the lubrication chamber forming portion. This further facilitates discharge of the lubricant from the lubrication chamber. The temperature around the primary pulley is therefore decreased, and thermal deterioration of the dry belt is suppressed.

(13) According to another aspect of the present teaching, the engine unit of the present teaching preferably includes the following arrangement, in addition to the arrangement (1).

The lubricant injection hole and the lubricant discharge hole are formed to connect the inside of the primary shaft member with the lubrication chamber.

According to this arrangement, the lubricant injection hole formed to connect the inside of the primary shaft member with the lubrication chamber makes it possible to reliably inject lubricant into the lubrication chamber in which the slide portion between the primary movable sheave and the primary shaft member is accommodated. The lubricant discharge hole formed to connect the inside of the primary shaft member with the lubrication chamber makes it possible to reliably discharge lubricant from the lubrication chamber in which the slide portion between the primary movable sheave and the primary shaft member is accommodated. With this arrangement, heat generated at the slide portion between the primary movable sheave and the primary shaft member is reliably absorbed by the lubricant in the lubrication chamber and is reliably discharged to the outside of the lubrication chamber together with the lubricant. This makes it possible to further prevent increase in temperature of the slide portion between the primary movable sheave and the primary shaft member. Furthermore, the slide portion between the primary movable sheave and the primary shaft member is further reliably lubricated by the lubricant. As a result, a friction state of the slide portion between the primary movable sheave and the primary shaft member accommodated in the lubrication chamber is further stabilized and frictional heat is further suppressed. The temperature around the primary pulley is therefore decreased, and thermal deterioration of the dry belt is suppressed.

(14) According to another aspect of the present teaching, the engine unit of the present teaching preferably includes the following arrangement, in addition to any one of the arrangements (9) to (13). The lubrication chamber forming portion includes a seal bearing attached to the primary shaft member, and
in the seal bearing, a seal plate is provided on at least one of surfaces in the rotational axis direction of the primary shaft member.

According to this arrangement, in the seal bearing, a seal plate is provided on at least one surface in the rotational axis direction of the primary shaft member. The seal bearing is therefore sealed on one side or both sides. When the seal bearing that is sealed on one side or both sides is used, the lubricant is stored in the lubrication chamber in which the slide portion between the primary movable sheave and the primary shaft member is accommodated, without allowing the lubricant to be discharged through a gap in the bearing. The temperature around the primary pulley is therefore decreased, and thermal deterioration of the dry belt is suppressed.

(15) According to another aspect of the present teaching, the engine unit of the present teaching preferably includes the following arrangement, in addition to the arrangement (14).

In the seal bearing, the seal plate is provided so that a gap is formed.

According to this arrangement, in the seal bearing, a seal plate is provided so that a gap exists at one or both of surfaces in the rotational axis direction of the primary shaft member. This seal bearing is therefore a so-called contactless seal bearing. When the so-called contactless seal bearing is used, loss due to the friction between the primary shaft member and the seal bearing is decreased. The temperature around the primary pulley is therefore decreased, and thermal deterioration of the dry belt is suppressed.

### <Definition of Slide Portion Between Primary Movable Sheave and Primary Shaft Portion>

In the present teaching, a slide portion between a primary movable sheave and a primary shaft portion is a portion where the primary movable sheave and the primary shaft portion directly make contact with each other and slide with each other when the primary movable sheave is moved by a primary movable sheave movement mechanism relative to the primary shaft portion in the rotational axis direction of the primary shaft portion.

### <Definition of Lubrication Chamber Forming Portion Forming Lubrication Chamber in Which Slide Portion Between Primary Movable Sheave and primary shaft member Is Accommodated>

In the present teaching, a lubrication chamber forming portion forming a lubrication chamber in which a slide portion between a primary movable sheave and a primary shaft member is accommodated indicates a lubrication chamber forming portion which is formed so that the slide portion between the primary movable sheave and the primary shaft member is exposed in the lubrication chamber.

### <Definitions of Contact Portions between Dry Belt and Primary Pulley and between Dry Belt and Secondary Pulley>

In this specification, contact portions between a dry belt and a primary pulley and between the dry belt and a secondary pulley are portions where the dry belt makes contact with the primary pulley and where the dry belt makes contact with the secondary pulley.

### <Definitions of Lubrication Space, Lubrication Chamber, and Dry Space>

In the present teaching, a lubrication space is a space where lubricant exists. Members in the space are lubricated by the lubricant. In the present teaching, lubricant exists in a lubrication chamber and members in the chamber are lubricated by the lubricant. In the present teaching, a dry space is a space where no lubricant exists. Members in the space are not lubricated by lubricant. Examples of the lubricant includes oil and grease.

### <Other Definitions>

In the present specification, an end portion of a certain component means a portion obtained by combining the end of the component and the vicinity thereof.

In the specification, a direction along a direction A is not limited to a direction in parallel to the direction A. The direction along the direction A encompasses a direction that intersects with the direction A at an angle which falls within the range from -45 degrees to 45 degrees. This definition applies to a case where a linear line extends along the direction A. The direction A does not indicate any specific direction. The direction A may be a vertical direction, an up-down direction, a front-rear direction, or a left-right direction.

In the present teaching, unless otherwise specified, when a radial direction of a member B is used in an explanation of a member A, the radial direction of the member B indicates a radial direction passing through the member A among all radial directions. A radial direction of a member B is used in an explanation of a member A when, for example, the member A extends along the radial direction of the member B, or the member A is pressed in the radial direction of the member B.

In this specification, an expression "a member A is provided in front of a member B when viewed in the left-right direction" indicates the following state. The members A and B are lined up in the front-rear direction when viewed in the left-right direction and a part of the member A, the part facing the member B, is provided in front of the member B when viewed in the left-right direction. According to this definition, the members A and B may not be lined up in the front-rear direction in three dimensions. The same applies to expressions "a member A is provided behind a member B", "a member A is provided directly above a member B", "a member A is provided directly below a member B", "a member A is provided to the left of a member B", and "a member A is provided to the right of a member B".

In the present teaching, terms "including", "comprising", "having", and derivatives thereof are used to encompass not only listed items and equivalents thereof but also additional items. The terms "mounted", "connected", and "coupled" are used in a broad sense. To be more specific, the terms encompass not only directly mounting, connection, and coupling but also indirect mounting, connection, and coupling. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicates "may but not must". In this specification, an arrangement which is explained by using the term "may" exerts at least the above-described effects of the arrangement (1) above.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching, the arrangements of the above-described different aspects may be variously combined.

Before an embodiment of the present teaching is detailed, it is informed that the present teaching is not limited to the configurations and layout of elements described below and/or shown in drawings. The present teaching may be implemented as another embodiment, or as an embodiment with various changes. Furthermore, the present teaching may be implemented by suitably combining below-described modifications.

This specification describes a new engine unit including an electronically-controlled continuously variable transmission using a dry belt. In the description below, many specific details will be given to realize full understanding of the present teaching, for the purpose of explanation. It is, however, evident that a person with ordinary skill in the art is able to implement the present teaching without such specific details. The disclosure should be considered as an example of the present teaching, and does not intend to restrict the present teaching to a specific embodiment which is described below with reference to drawings.

### [Advantageous Effects]

An engine unit of the present teaching, which includes an electronically-controlled continuously variable transmission using a dry belt, prevents thermal deterioration of the dry belt.

### [Brief Description of Drawings]

FIG. 1 is a schematic representation of the structure of an engine unit of an embodiment.
FIG. 2 is a left side view showing a part of an engine unit of Specific Example 1.
FIG. 3 is a left side view of an electronically-controlled continuously variable transmission of Specific Example 1.
FIG. 4 is a cross section taken along a I-I line in FIG. 2.
FIG. 5 is a cross section taken along a II-II line in FIG. 2.
FIG. 6 is a top view of a lubrication chamber forming portion of the electronically-controlled continuously variable transmission of Specific Example 1.
FIG. 7 is a schematic cross section taken along an X-X line in FIG. 6.
FIG. 8 is a top view of a lubrication chamber forming portion of the electronically-controlled continuously variable transmission of a modification of Specific Example 1.
FIG. 9 is a schematic cross section taken along an X-X line in FIG. 8.
FIG. 10 is a front view of a lubrication chamber forming portion of the electronically-controlled continuously variable transmission of Specific Example 2.
FIG. 11 is a front view of a lubrication chamber forming portion of the electronically-controlled continuously variable transmission of Specific Example 3.
FIG. 12 is a front view of a lubrication chamber forming portion of the electronically-controlled continuously variable transmission of Specific Example 4.
FIG. 13 schematically shows a modification of FIG. 6.
FIG. 14 is a schematic diagram of an electronically-controlled continuously variable transmission of a modification.
FIG. 15 is a front view of a lubrication chamber forming portion of the electronically-controlled continuously variable transmission of Specific Example 5.

### [Description of Embodiments]

### (Embodiment)

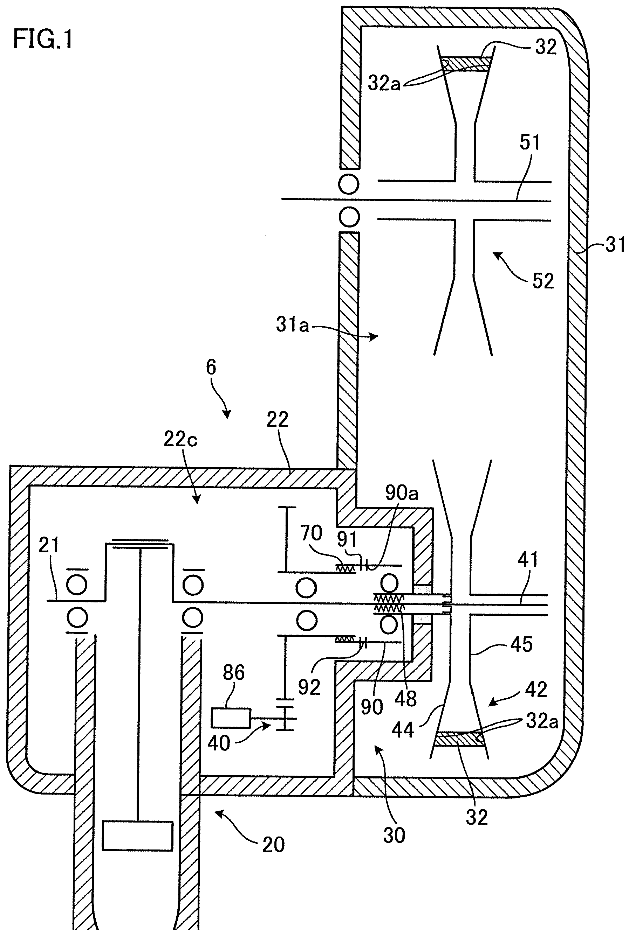

The following will describe an engine unit 6 of an embodiment of the present teaching with reference to a schematic diagram in FIG. 1. As shown in FIG. 1, an engine unit 6 includes an engine main body unit 20 and an electronically-controlled continuously variable transmission 30.

The engine main body unit 20 includes a crankcase member 22 and a crankshaft member 21. The crankcase member 22 forms a lubrication space 22c in which lubricant is provided. The crankshaft member 21 is provided in the lubrication space 22c.

The electronically-controlled continuously variable transmission 30 includes a primary pulley 42, a secondary pulley 52, a dry belt 32, a dry belt casing 31, and a primary movable sheave movement mechanism 40.

The primary pulley 42 is attached to a primary shaft member 41 to which power is transmitted from the crankshaft member 21. The primary pulley 42 includes a primary movable sheave 44 and a sheave 45. The primary movable sheave 44 is rotatable in accordance with the rotation of the crankshaft member 21 and is movable in a rotational axis direction of the primary shaft member 41. The sheave 45 is movable or not movable in the rotational axis direction of the primary shaft member 41.

The secondary pulley 52 is attached to a secondary shaft member 51. The secondary pulley 52 rotates together with the secondary shaft member 51.

The dry belt 32 is wound onto the primary pulley 42 and the secondary pulley 52. Contact portions 32a where the dry belt 32 makes contact with the primary pulley 42 and the secondary pulley 52 are not lubricated by lubricant.

The dry belt casing 31 forms a dry space 31a. The dry belt casing 31 is arranged so that the primary pulley 42, the secondary pulley 52, and the dry belt 32 are provided in the dry space 31a.

The primary movable sheave movement mechanism 40 includes an electric motor 86. The primary movable sheave movement mechanism 40 moves the primary movable sheave 44 in the rotational axis direction of the primary shaft member 41 by rotational force of the electric motor 86, relative to the primary shaft member 41.

The primary movable sheave movement mechanism 40 includes a lubrication chamber forming portion 90 that forms a lubrication chamber 90a. The lubrication chamber forming portion 90 is formed to accommodate, in the lubrication chamber 90a, a slide portion 48 between the primary movable sheave 44 and the primary shaft member 41. The slide portion 48 between the primary movable sheave 44 and the primary shaft member 41 is a portion where the primary movable sheave 44 and the primary shaft member 41 slide with each other when the primary movable sheave 44 is moved by the primary movable sheave movement mechanism 40 relative to the primary shaft member 41 in the rotational axis direction of the primary shaft member 41. The slide portion 48 between the primary shaft member 41 and the primary movable sheave 44 is a portion where the primary shaft member 41 and the primary movable sheave 44 directly make contact with each other and slide with each other when the primary movable sheave 44 moves in the rotational axis direction of the primary shaft member 41 relative to the primary shaft member 41.

The lubricant in the lubrication chamber 90a may lubricate a slide portion 70 which is different from the slide portion 48 and is a portion where the primary movable sheave 44 and the primary shaft member 41 slide with each other when the primary movable sheave 44 moves in the rotational axis direction of the primary shaft member 41 relative to the primary shaft member 41. The slide portion 70 is a portion that is not directly in contact with either the primary shaft member 41 or the primary movable sheave 44, and is a portion where the primary shaft member 41 and the primary movable sheave 44 indirectly make contact with each other through another member and slide with each other. The slide portion 70 is a portion where members that are provided on the primary shaft member 41 or the primary movable sheave 44 and constitute the lubrication chamber forming portion 90 directly make contact with each other and slide with each other when the primary movable sheave 44 moves in the rotational axis direction of the primary shaft member 41 relative to the primary shaft member 41.

The lubrication chamber forming portion 90 is arranged to allow lubricant to be injected into the lubrication chamber 90a in order to lubricate the slide portion 48. The lubrication chamber forming portion 90 has a lubricant injection hole 91 and a lubricant discharge hole 92. The lubricant discharge hole 92 allows the lubricant to be discharged from the lubrication chamber 90a.

With the arrangements above, the engine unit 6 of the present embodiment exerts the following effects.

The primary movable sheave movement mechanism 40 includes the lubrication chamber forming portion 90 forming the lubrication chamber 90a accommodating the slide portion 48 between the primary shaft member 41 and the primary movable sheave 44. The lubrication chamber forming portion 90 has the lubricant injection hole 91 and the lubricant discharge hole 92. The lubricant injection hole 91 is arranged to allow lubricant to be injected into the lubrication chamber 90a in order to lubricate the slide portion 48. The lubricant discharge hole 92 allows the lubricant to be discharged from the lubrication chamber 90a. In this way, the lubricant in the lubrication chamber 90a is injected though the lubricant injection hole 91 and the lubricant in the lubrication chamber 90a is discharged through the lubricant discharge hole 92. Heat generated at the slide portion 48 between the primary movable sheave 44 and the primary shaft member 41 is therefore absorbed by the lubricant in the lubrication chamber 90a and is discharged to the outside of the lubrication chamber 90a together with the lubricant. This makes it possible to prevent increase in temperature of the slide portion 48 between the primary movable sheave 44 and the primary shaft member 41. Furthermore, the slide portion 48 between the primary movable sheave 44 and the primary shaft member 41 is lubricated by a large amount of lubricant. As a result, a friction state of the slide portion 48 between the primary movable sheave 44 and the primary shaft member 41 accommodated in the lubrication chamber 90a is stabilized and frictional heat is suppressed. The temperature around the primary pulley 42 is therefore decreased, and thermal deterioration of the dry belt 32 is suppressed.

### (Specific Examples of Embodiment)

The following describes specific examples of the embodiments of the present teaching. Hereinafter, a front-rear direction, a left-right direction, and an up-down direction are a front-rear direction, a left-right direction, and an up-down direction viewed from an engine unit 106, 206, 306 mounted on a vehicle. In this regard, it is assumed that the vehicle on which the engine unit 106, 206, 306 is mounted is provided on a horizontal ground. The engine unit 106, 206, 306 is mounted on a motorcycle, for example. The arrows F, B, L, R, U, and D in the figures indicate forward, rearward, leftward, rightward, upward, and downward, respectively. The specific examples below encompass all features of the embodiment shown in FIG. 1. It is noted that items identical with those of the embodiment shown in FIG. 1 are indicated by the same reference symbols.

### (Specific Example 1)

### [Overall Structure of Engine Unit]

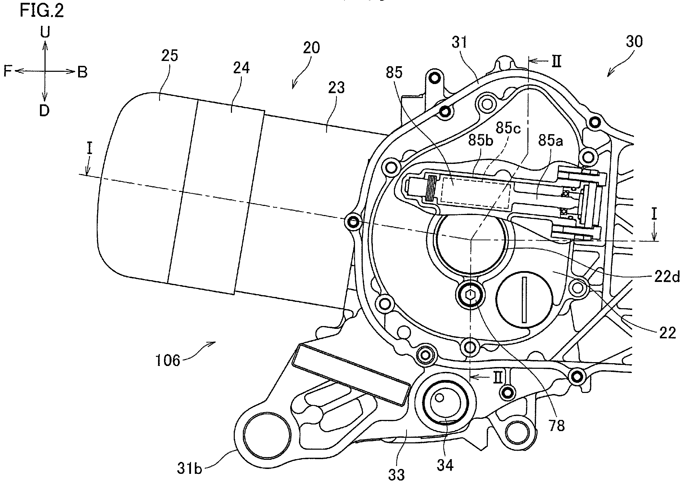

An engine unit 106 of Specific Example 1 will be described with reference to FIG. 2 to FIG. 4. It is noted that the crankshaft member 21 is not shown in FIG. 2. The engine unit 106 includes an engine main body unit 20 and an electronically-controlled continuously variable transmission 30. The electronically-controlled continuously variable transmission 30 is configured to transmit power of the engine main body unit 20. For example, the electronically-controlled continuously variable transmission 30 transmits power of the engine main body unit 20 to a driving wheel 3.

### [Structure of Engine Main Body Unit]

To begin with, the engine main body unit 20 will be described. The engine main body unit 20 is a single-cylinder engine having one cylinder. The engine main body unit 20 is a four-stroke one-cycle engine which repeats an intake process, a compression process, a combustion process (expansion process), and an exhaust process.

The engine main body unit 20 includes a crankshaft member 21, a crankcase member 22, a cylinder body 23, a cylinder head 24, and a head cover 25. The head cover 25 constitutes a front portion of the engine unit 106. The crankcase member 22 forms a lubrication space 22c in which lubricant is provided. An example of the lubricant is oil. The crankshaft member 21 is provided in the lubrication space 22c. The cylinder head 24 is connected to a rear end portion of the head cover 25. The cylinder body 23 is connected to a rear end portion of the cylinder head 24.

The engine main body unit 20 is a forced air-cooled engine. The engine main body unit 20 includes a shroud 20a. The shroud 20a covers the whole circumference of the cylinder body 23 and the cylinder head 24. The shroud 20a covers a right side portion of the crankcase member 22. An air inlet 20b is formed in a right side portion of the shroud 20a. At a front portion of the shroud 20a, an air outlet (not illustrated) is formed. A right end portion of the later-described crankshaft member 21 protrudes from the crankcase member 22 and is connected to a cooling fan 20c. The cooling fan 20c is rotationally driven by the rotation of the crankshaft member 21. As the cooling fan 20c is driven, air is introduced into the shroud 20a through the air inlet 20b. As the air introduced into the shroud 20a makes contact with later-described cooling fins 23b of the cylinder body 23, the cylinder body 23 radiates heat. The air introduced into the shroud 20a is discharged through an air outlet.

A cylinder hole 23a is formed in the cylinder body 23. The center axis of the cylinder hole 23a is a cylinder axial line. The engine main body unit 20 is mounted on a vehicle body frame so that the cylinder axial line extends along the front-rear direction. The inclination angle of the cylinder axial line with respect to the horizontal direction is 0 degrees or greater and 45 degrees or less. A piston 26 is slidably housed inside the cylinder hole 23a. A combustion chamber 24a is formed by a lower surface of the cylinder head 24, the cylinder hole 23a, and the piston 26. The cylinder head 24 includes an ignition device 24b. The ignition device 24b is configured to ignite a mixture gas of fuel and air in the combustion chamber 24a.

The crankshaft member 21 includes two crank webs 21a and two crank main shaft members 21b. The two crank webs 21a are provided between the two crank main shaft members 21b. The two crank webs 21a are connected to each other by an eccentric shaft (not illustrated). The axial center of the eccentric shaft is eccentric from the rotational center of the crankshaft member 21. The eccentric shaft of the crankshaft member 21 is connected to the piston 26 by a connecting rod 26a. A bearing 27a is provided to the right of the right crank web 21a. A bearing 27b is provided to the left of the left crank web 21a. The crankshaft member 21 is supported by the crankcase member 22 via the bearing 27a and the bearing 27b. A driving cam chain sprocket 28a is fitted to the crankshaft member 21. In the cylinder head 24, a driven cam chain sprocket 28b is provided. A cam chain 28c is provided to bridge the driving cam chain sprocket 28a and the driven cam chain sprocket 28b. The driven cam chain sprocket 28b is attached to a valve driving camshaft 28d. The rotational force of the crankshaft member 21 is transmitted to the valve driving camshaft 28d via the cam chain 28c. In sync with the crankshaft member 21, the valve driving camshaft 28d opens and closes an intake valve and an exhaust valve which are not illustrated, at predetermined timings.

The crankshaft member 21 is connected to a starter motor 29 which is integrated with a generator. The starter motor 29 is configured to rotate the crankshaft member 21 at engine start. The generator generates power by the rotational force of the crankshaft member 21. The starter motor and the generator may be independent from each other.

### [Overall Structure of Electronically-Controlled Continuously Variable Transmission]

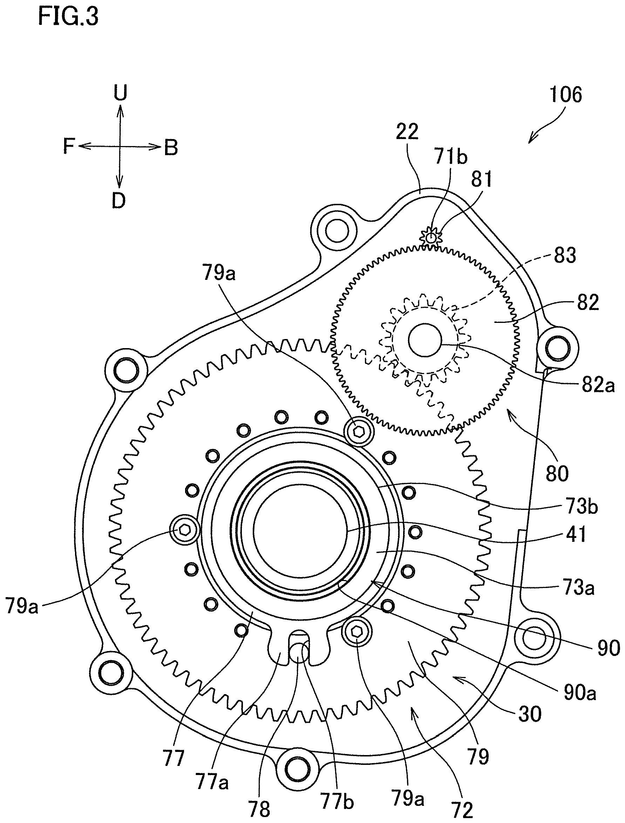

The following will describe the electronically-controlled continuously variable transmission 30 with reference to FIG. 3 to FIG. 6. FIG. 3 shows a state in which the dry belt casing 31 is detached from the electronically-controlled continuously variable transmission 30 shown in FIG. 2. The electronically-controlled continuously variable transmission 30 includes a primary pulley 42, a secondary pulley 52, a dry belt 32, a dry belt casing 31, and a primary movable sheave movement mechanism 40.

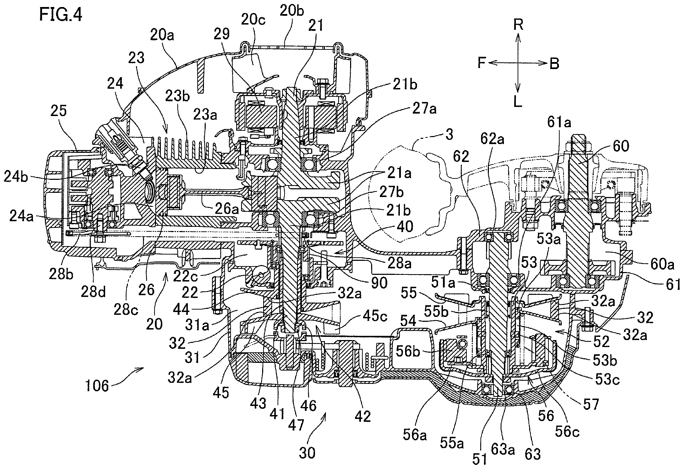

As shown in FIG. 4, the dry belt casing 31 is provided behind the cylinder body 23. A synonym for the dry belt casing 31 is a transmission casing. The dry belt casing 31 accommodates the primary pulley 42, the secondary pulley 52, and the dry belt 32. The dry belt casing 31 extends rearward from a rear end portion of the cylinder body 23 to the driving wheel 3 in the vehicle front-rear direction. A suspending portion 33 is formed at a lower portion of the dry belt casing 31. On the suspending portion 33, a front boss portion 31b is formed to protrude forward in the vehicle front-rear direction. The front boss portion 31b is supported by the vehicle body frame to be rotatable by means of a pivot shaft (not illustrated). An oil filter 34 is attached to the suspending portion 33. The dry belt casing 31 forms a dry space 31a.

The dry belt 32 is wound onto the primary pulley 42 and the secondary pulley 52. The dry belt 32 has contact portions 32a where the dry belt 32 makes contact with the primary pulley 42 and the secondary pulley 52. The contact portions 32a are not lubricated by lubricant. The contact portions 32a of the dry belt 32 are portions where the dry belt 32 makes contact with the primary pulley 42 and the secondary pulley 52.

The primary shaft member 41 is provided at the left end in the vehicle left-right direction of the crankshaft member 21. The primary shaft member 41 is integrally molded with the crankshaft member 21. The primary rotational axis is on the crank rotational axis. The primary shaft member 41 is rotatable in accordance with the rotation of the crankshaft member 21. The primary shaft member 41 is therefore a drive shaft. The primary shaft member 41 receives power from the crankshaft member 21. The primary shaft member 41 is a portion to the left of the cam chain 28c which is wound on the crankshaft member 21. The primary shaft member 41 is shorter in diameter than a part of the crankshaft member 21, where the cam chain 28c is wound. The primary shaft member 41 is arranged such that a left portion in the vehicle left-right direction is shorter in diameter than a right portion. The primary shaft member 41 penetrates the crankcase member 22. To put it differently, in the vehicle left-right direction, the right portion of the primary shaft member 41 is provided in the lubrication space 22c formed in the crankcase member 22. The left portion of the primary shaft member 41 is provided in the dry space 31a formed in the dry belt casing 31.

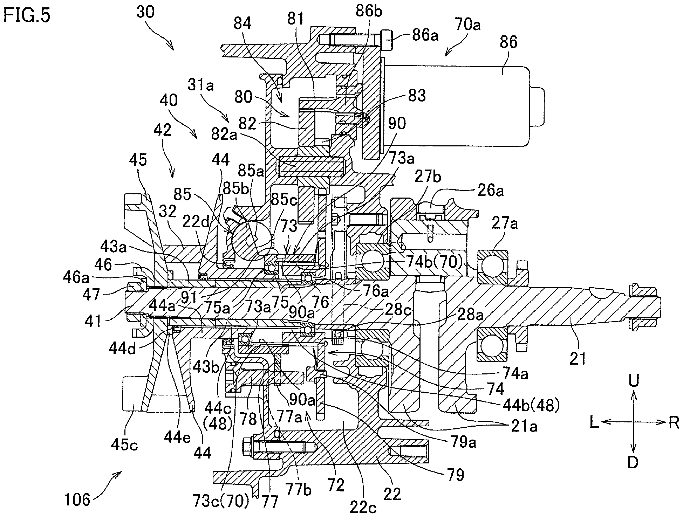

As shown in FIG. 5, the primary pulley 42 is attached to the primary shaft member 41. The primary pulley 42 includes a primary movable sheave 44 and a primary fixed sheave 45. The primary shaft member 41 has a collar member 43a and a collar member 43b on the outer circumferential surface. The collar member 43a and the collar member 43b are cylindrical in shape. The collar member 43a and the collar member 43b are connected to each other. The collar member 43a and the collar member 43b are fastened to the primary shaft member 41 by a locknut 47 through a spacer 46 and a disc spring 46a. The collar member 43a and the collar member 43b are arranged to be immovable in the rotational axis direction of the primary shaft member 41 and in the rotational direction of the primary movable sheave 44. The collar member 43a and the collar member 43b rotate together with the crankshaft member 21. The collar member 43a is provided to the right of the primary fixed sheave 45 in the vehicle left-right direction. The collar member 43b is provided to the right of the collar member 43a in the vehicle left-right direction. The primary movable sheave 44 is provided on the outer circumferential surfaces of the collar member 43a and the collar member 43b. In the outer circumferential surface of the collar member 43b, a slit 44b is formed along the rotational axis direction of the primary shaft member 41. In an example shown in FIG. 5, the rotational axis direction of the primary shaft member 41 is identical with the vehicle left-right direction.

As shown in FIG. 4, the primary movable sheave 44 and the primary fixed sheave 45 are provided to the left of the crankcase member 22 in the vehicle left-right direction. To put it differently, the primary movable sheave 44 and the primary fixed sheave 45 are provided in the dry space 31a. The central axial line of the primary movable sheave 44 is on the rotational axes of the crankshaft member 21 and the primary shaft member 41, and the primary movable sheave 44 is arranged to be rotatable about the rotational axes of the crankshaft member 21 and the primary shaft member 41.

As shown in FIG. 5, the primary movable sheave 44 includes a slide member 44a that extends in the rotational axis direction of the primary shaft member 41. The slide member 44a is cylindrical in shape so that the primary shaft member 41 can be inserted therein. The slide member 44a of the primary movable sheave 44 has, on its inner circumferential surface, a spline 44c that extends along the rotational axis direction of the primary shaft member 41. The spline 44c is inserted into the slit 44b of the collar member 43b. The spline 44c is arranged to be movable along the slit 44b in the rotational axis direction of the primary shaft member 41. The primary movable sheave 44 is therefore movable along the slit 44b of the collar member 43b in the rotational axis direction of the primary movable sheave 44. Meanwhile, the spline 44c is arranged to be immovable in the slit 44b in the rotational direction of the primary movable sheave 44. The primary movable sheave 44 therefore rotates together with the crankshaft member 21 and the primary shaft member 41.

The spline 44c of the slide member 44a of the primary movable sheave 44 and the slit 44b of the collar member 43b of the primary shaft member 41 directly make contact with each other and slide with each other, when the primary movable sheave 44 is moved by the primary movable sheave movement mechanism 40 in the rotational axis direction of the primary shaft member 41 relative to the primary shaft member 41. To put it differently, the spline 44c of the slide member 44a of the primary movable sheave 44 and the slit 44b of the collar member 43b of the primary shaft member 41 constitute a slide portion 48 between the primary movable sheave 44 and the primary shaft member 41.

A sealing member 44d is provided between the spline 44c of the primary movable sheave 44 and the slit 44b of the collar member 43a of the primary shaft member 41. The sealing member 44d is provided at the left end of the primary movable sheave 44. The slide member 44a of the primary movable sheave 44, the collar member 43b of the primary shaft member 41, and the sealing member 44d constitute a later-described lubrication chamber forming portion 90. The spline 44c of the slide member 44a of the primary movable sheave 44 and the slit 44b of the collar member 43b of the primary shaft member 41 are accommodated in a lubrication chamber 90a formed by the lubrication chamber forming portion 90. In other words, the spline 44c of the primary movable sheave 44 and the slit 44b of the collar member 43b of the primary shaft member 41 are lubricated by oil in the lubrication chamber 90a. The sealing member 44d prevents the oil in the lubrication chamber 90a from leaking out from the lubrication chamber 90a to the dry space 31a.

A right end portion of the slide member 44a is formed to be shorter in diameter than the other parts. A later-described moving member bearing 75 is fitted to the outer circumferential surface of a right end portion of the slide member 44a. The slide member 44a is provided to penetrate the crankcase member 22. A sealing member 22d is provided between the outer circumferential surface of the slide member 44a and the crankcase member 22. The sealing member 22d prevents the oil from leaking out from the lubrication space 22c formed by the crankcase member 22 to the dry space 31a.

The primary fixed sheave 45 is spline-fitted to the primary shaft member 41 so that the primary fixed sheave 45 is in contact with a left face of the collar member 43a in the vehicle left-right direction. At a left end portion of the primary shaft member 41, the spacer 46, the disc spring 46a, and the locknut 47 are provided. The spacer 46, the disc spring 46a, and the locknut 47 are provided to the left of the primary fixed sheave 45 in the vehicle left-right direction. As the locknut 47 is fastened, the primary fixed sheave 45 is fixed to the primary shaft member 41 so as to be immovable in the rotational axis direction of the primary shaft member 41. The primary fixed sheave 45 therefore rotates together with the crankshaft member 21 and the primary shaft member 41.

On a left face of the primary fixed sheave 45, cooling fins 45c are radially provided to be integrated with the primary fixed sheave 45. At a front portion of the dry belt casing 31, an air inflow port (not illustrated) is formed. The primary fixed sheave 45 is rotationally driven by the rotation of the primary shaft member 41. The primary fixed sheave 45 is therefore rotationally driven by the rotation of the crankshaft member 21. As the cooling fans 45c are rotated, air is introduced into the dry belt casing 31 through the air inflow port. In other words, the cooling fans 45c introduce the outside air into the dry belt casing 31. The air introduced into the dry belt casing 31 makes contact with the primary pulley 42, the secondary pulley 52, and the dry belt 32. As a result of this, the primary pulley 42, the secondary pulley 52, and the dry belt 32 radiate heat. The air in the dry belt casing 31 is discharged through an air outlet (not illustrated) at a rear portion or a lower portion of the dry belt casing 31.

As such, the primary shaft member 41 rotates in accordance with the rotation of the crankshaft member 21. The primary movable sheave 44 and primary fixed sheave 45 are rotationally driven by the rotation of the primary shaft member 41. The primary movable sheave 44 moves in the rotational axis direction of the primary shaft member 41 in accordance with the movement of the slide member 44a. The primary fixed sheave 45 is immovable in the rotational axis direction of the primary shaft member 41.

The primary movable sheave 44 and the primary fixed sheave 45 retain the dry belt 32. A surface of the primary movable sheave 44, which faces the primary fixed sheave 45, makes contact with a contact portion 32a of the dry belt 32. A surface of the primary fixed sheave 45, which faces the primary movable sheave 44, makes contact with a contact portion 32a of the dry belt 32. The contact portions 32a are contact portions where the dry belt 32 makes contact with the primary pulley 42 and the secondary pulley 52. The dry belt 32 rotates in accordance with the rotation of the primary movable sheave 44 and the primary fixed sheave 45. Because the dry belt 32 is provided in the dry space 31a, the contact portions 32a of the dry belt 32 making contact with the primary fixed sheave 45 and the primary movable sheave 44 are not lubricated by lubricant.

As shown in FIG. 4, the rotational axis direction of the secondary shaft member 51 is in parallel to the rotational axis direction of the primary shaft member 41. The secondary shaft member 51 is a driven shaft member. A gear casing 61 is provided to the right of a rear end portion of the dry belt casing 31 in the vehicle left-right direction. The gear casing 61 is connected to a casing main body 62 provided to the right of the gear casing 61 in the vehicle left-right direction. The gear casing 61 and the casing main body 62 form a lubrication space 60a in which oil is provided. The secondary shaft member 51 is provided to penetrate the gear casing 61. To put it differently, a right portion in the vehicle left-right direction of the secondary shaft member 51 is provided in the lubrication space 60a formed by the gear casing 61 and the casing main body 62. A left portion of the secondary shaft member 51 is provided in the dry space 31a formed by the dry belt casing 31.

A drive shaft member 60 rotating the driving wheel 3 is provided in the lubrication space 60a. The rotational axis direction of the drive shaft member 60 is arranged to be in parallel to the rotational axis direction of the secondary shaft member 51. In the lubrication space 60a, furthermore, a secondary main shaft member (not illustrated) is provided. The rotational axis direction of the secondary main shaft member is arranged to be in parallel to the rotational axis direction of the secondary shaft member 51 and the rotational axis direction of the drive shaft member 60. A sealing member 51a is provided between the outer circumferential surface of the secondary shaft member 51 and the gear casing 61. The sealing member 51a prevents oil from leaking to the dry space 31a from the lubrication space 60a.

The secondary shaft member 51 is supported by the gear casing 61 through a bearing 61a. A right end portion of the secondary shaft member 51 is supported by the casing main body 62 through a bearing 62a. A left end portion of the secondary shaft member 51 is supported by the dry belt casing 31 through a bearing 63 and a spacer 63a.

The secondary pulley 52 is attached to the secondary shaft member 51. The secondary pulley 52 includes a collar member 53, a secondary movable sheave 54, and a secondary fixed sheave 55. The collar member 53 is formed to be cylindrical in shape. The collar member 53 is rotatably attached to the outer circumferential surface of the secondary shaft member 51 through a bearing 55a and a bearing 55b. The collar member 53 is attached to the secondary shaft member 51 to be immovable in the rotational axis direction of the secondary movable sheave 54. A slide member 53a is attached to the collar member 53. The slide member 53a is provided between the inner circumferential surface of the secondary movable sheave 54 and the outer circumferential surface of the collar member 53. The slide member 53a is connected to the secondary movable sheave 54. In the outer circumferential surface of the collar member 53, a slit 53b is formed to extend along the rotational axis direction of the secondary movable sheave 54. In an example shown in FIG. 4, the rotational axis direction of the secondary movable sheave 54 is identical with the vehicle left-right direction. The slide member 53a has a key 53c. The key 53c is inserted into the slit 53b. The key 53c is arranged to be movable in the rotational axis direction of the secondary movable sheave 54. The slide member 53a and the secondary movable sheave 54 are therefore movable in the rotational axis direction of the secondary shaft member 51 along the slit 53b of the collar member 53. Meanwhile, the key 53c is arranged to be immovable in the rotational direction of the secondary movable sheave 54 in the slit 53b. With this arrangement, the slide member 53a and the secondary movable sheave 54 rotate in accordance with the rotation of the collar member 53.

The secondary fixed sheave 55 is fitted with and fixed to the collar member 53. The secondary fixed sheave 55 is attached to the secondary shaft member 51 through the collar member 53. The secondary fixed sheave 55 rotates in accordance with the rotation of the collar member 53. The secondary fixed sheave 55 rotates irrespective of the rotation of the secondary shaft member 51. The secondary fixed sheave 55 is attached to the collar member 53 to be immovable in the rotational axis direction of the secondary movable sheave 54.

As such, the secondary movable sheave 54 and the secondary fixed sheave 55 are rotationally driven in accordance with the rotation of the collar member 53. The secondary movable sheave 54 moves in the rotational axis direction of the secondary movable sheave 54 in accordance with the movement of the slide member 53a. The secondary fixed sheave 55 is immovable in the rotational axis direction of the secondary movable sheave 54.

The secondary movable sheave 54 and the secondary fixed sheave 55 retain the dry belt 32. A surface of the secondary movable sheave 54, which faces the secondary fixed sheave 55, makes contact with a contact portion 32a of the dry belt 32. A surface of the secondary fixed sheave 55, which faces the secondary movable sheave 54, makes contact with a contact portion 32a of the dry belt 32. The dry belt 32 rotates in accordance with the rotation of the primary movable sheave 44 and the primary fixed sheave 45. The secondary movable sheave 54 and the secondary fixed sheave 55 rotate in accordance with the rotation of the dry belt 32. Because the dry belt 32 is provided in the dry space 31a, the contact portions 32a of the dry belt 32 making contact with the secondary movable sheave 54 and the secondary fixed sheave 55 are not lubricated by lubricant.

As shown in FIG. 4, a centrifugal clutch 56 is provided to the left of the secondary pulley 52 in the vehicle left-right direction. The centrifugal clutch 56 is attached to the secondary shaft member 51. The centrifugal clutch 56 includes a weight arm 56a, weights 56b, and an outer clutch 56c. The weight arm 56a is fitted with and fixed to the collar member 53. The weight arm 56a rotates together with the collar member 53. The weights 56b are attached to the weight arm 56a to be swingable in the radial direction of the secondary shaft member 51. The weights 56b are lined up in the rotational direction of the secondary shaft member 51. The outer clutch 56c is provided to surround the weights 56b. The outer clutch 56c is fitted with and fixed to the secondary shaft member 51. The outer clutch 56c rotates together with the secondary shaft member 51. A spring 57 is provided between the secondary movable sheave 54 and the weight arm 56a. The secondary movable sheave 54 is biased by this spring 57 in a direction in which the effective diameter of the secondary pulley 52 increases.

As the rotation speed of the secondary pulley 52 increases, the weights 56b swing so that the gravity centers thereof move outward in the radial direction of the secondary shaft member 51 on account of the centrifugal force, and make contact with the inner surface of the outer clutch 56c. As a result, the weight arm 56a is fitted with the outer clutch 56c. With this arrangement, the collar member 53 and the secondary shaft member 51 rotate together. The rotational force of the secondary pulley 52 is transmitted to the secondary shaft member 51. The rotational force of the secondary shaft member 51 is then transmitted to the driving wheel 3 though an unillustrated secondary main shaft member and the drive shaft member 60.

The dry belt 32 is wound onto the primary pulley 42 and the secondary pulley 52. The dry belt 32 is a transmission belt made of rubber or synthetic resin. In FIG. 4, the dry belt 32 indicated by full lines is the dry belt 32 at a low-speed position (low position) whereas the dry belt 32 indicated by two-dot chain lines is the dry belt 32 at a high-speed position (top position). The top position of the dry belt 32 is a position where the width of the primary pulley 42 is shortest. The width of the primary pulley 42 indicates the width of the groove formed by the primary movable sheave 44 and the primary fixed sheave 45. To put it differently, the top position of the dry belt 32 is a position where the diameter of the dry belt 32 wound onto the primary pulley 42 is the longest and the transmission ratio is the lowest. Meanwhile, the low-speed position (low position) of the dry belt 32 is a position where the width of the primary pulley 42 is the longest. To put it differently, the low position of the dry belt 32 is a position where the diameter of the dry belt 32 wound onto the primary pulley 42 is the shortest and the transmission ratio is the highest. The dry belt 32 is provided in the dry space 31a in the dry belt casing 31.

### [Structure of Primary Movable Sheave Movement Mechanism]

As shown in FIG. 5, the primary movable sheave movement mechanism 40 includes a rotational force conversion mechanism 72, a rotational force transmission mechanism 80, and a lubrication chamber forming portion 90.

The rotational force conversion mechanism 72 includes a relative moving member 73 and a rotating member 74. The rotational force conversion mechanism 72 moves the primary movable sheave 44 in the rotational axis direction of the primary shaft member 41. The rotational force conversion mechanism 72 is provided in the lubrication space 22c. The rotating member 74 includes a fixed screw part 74a, a rotating member bearing 76, and a sheave-side gear 79.

The rotating member bearing 76 is fitted with the outer circumferential surface of the primary shaft member 41. The rotating member bearing 76 is provided at the right end of the collar member 43b of the primary shaft member 41. The fixed screw part 74a is fitted with the outer circumferential surface of the rotating member bearing 76. In other words, the fixed screw part 74a is supported by the primary shaft member 41 through the rotating member bearing 76. The rotating member bearing 76 is provided so that its central axial line extends along the rotational axis direction of the primary shaft member 41. The rotating member bearing 76 includes a cylindrical inner race, a cylindrical outer race provided radially outside the inner race, and rolling bodies provided between the inner race and the outer race. The rotating member bearing 76 has an internal gap 76a between the rolling bodies and the inner race and between the rolling bodies and the outer race. The rotating member bearing 76 is a seal bearing. The rotating member bearing 76 is a seal bearing in which a seal plate is provided on at least one of surfaces in the rotational axis direction of the primary shaft member 41. The seal plate is provided between the outer race and the inner race so that no gap is formed between the outer race and the inner race. When the rotating member bearing 76 is arranged so that seal plates are provided on the both surfaces in the rotational axis direction of the primary shaft member 41, the seal plates are aligned with the rolling bodies in the rotational axis direction of the primary shaft member 41. The rotating member bearing 76 may be a seal bearing in which a seal plate is provided so that a gap exists at one or both of surfaces in the rotational axis direction of the primary shaft member 41. In other words, the seal plate may be provided between the outer race and the inner race so that a gap is formed between the outer race and the inner race.

The fixed screw part 74a rotates irrespective of the rotation of the primary shaft member 41. The sheave-side gear 79 is fixed to a right end portion of the fixed screw part 74a. The outer diameter of the sheave-side gear 79 is longer than the outer diameter of the primary pulley 42. The outer diameter of the sheave-side gear 79 may be equal to or shorter than the outer diameter of the primary pulley 42. The sheave-side gear 79 is provided with three bolts 79a (see FIG. 3). Heads of the three bolts 79a are provided on the left surface of the sheave-side gear 79. The three bolts 79a rotate together with the sheave-side gear 79. The sheave-side gear 79 is engaged with the rotational force transmission gear 82. The sheave-side gear 79 is rotated by the rotational force of the rotational force transmission gear 82. In other words, the rotating member 74 is rotated by the rotational force of the rotational force transmission gear 82. The rotational force transmission gear 82 is included in the rotational force transmission mechanism 80. In other words, the rotating member 74 is rotated by the rotational force transmitted from the rotational force transmission mechanism 80.

The relative moving member 73 includes a cylindrical movable screw part 73a, a moving member bearing 75, and a ring member 77. The moving member bearing 75 is fitted with the outer circumferential surface of the right end portion of the slide member 44a of the primary movable sheave 44. The movable screw part 73a is fitted with the outer circumferential surface of the moving member bearing 75. In other words, the outer circumferential surface of the moving member bearing 75 is provided on the inner circumferential surface of the movable screw part 73a. The movable screw part 73a is supported by the slide member 44a of the primary movable sheave 44 through the moving member bearing 75. The moving member bearing 75 is provided so that its central axial line extends along the rotational axis direction of the primary shaft member 41. The moving member bearing 75 includes a cylindrical inner race, a cylindrical outer race provided radially outside the inner race, and rolling bodies provided between the inner race and the outer race. The moving member bearing 75 has an internal gap 75a between the rolling bodies and the inner race and between the rolling bodies and the outer race. The moving member bearing 75 is a seal bearing. The moving member bearing 75 is a seal bearing in which a seal plate is provided on at least one of surfaces in the rotational axis direction of the primary shaft member 41. The seal plate is provided between the outer race and the inner race so that no gap is formed between the outer race and the inner race. When the moving member bearing 75 is arranged so that seal plates are provided on both the surfaces in the rotational axis direction of the primary shaft member 41, the seal plates are aligned with the rolling bodies in the rotational axis direction of the primary shaft member 41. The moving member bearing 75 may be a seal bearing in which a seal plate is provided so that a gap exists at one or both of the surfaces in the rotational axis direction of the primary shaft member 41. In other words, the seal plate may be provided between the outer race and the inner race so that a gap is formed between the outer race and the inner race.

A ring member 77 is coupled by pressure with the outer circumferential surface of a right portion of the movable screw part 73a. The ring member 77 is immovable in the rotational axis direction of the primary movable sheave 44. In the ring member 77, a rotation stopper 77a (see FIG. 3) is formed to provide a U-shaped hole portion 77b. Into the hole portion 77b of the rotation stopper 77a, a bolt 78 fixed to the crankcase member 22 is inserted. As the bolt 78 is inserted into the rotation stopper 77a, the ring member 77 is not rotatable in the rotational direction of the primary movable sheave 44. In other words, due to the ring member 77, the relative moving member 73 is not rotatable in the rotational direction of the primary movable sheave 44.

The relative moving member 73 is in contact with the rotating member 74. In the inner circumferential surface of the movable screw part 73a of the relative moving member 73, a female screw 73c is formed. In the outer circumferential surface of the fixed screw part 74a of the rotating member 74, a male screw 74b is formed. The female screw 73c of the movable screw part 73a and the male screw 74b of the fixed screw part 74a are trapezoidal screws arranged to be engaged with each other. The female screw 73c of the movable screw part 73a and the male screw 74b of the fixed screw part 74a move relative to each other along the rotational axis direction of the primary shaft member 41 when these screws are rotated relative to each other. In other words, the fixed screw part 74a is engaged with and in contact with the movable screw part 73a. The movable screw part 73a and the fixed screw part 74a are in contact with each other at the female screw 73c and the male screw 74b. When the primary movable sheave 44 is moved by the primary movable sheave movement mechanism 40 in the rotational axis direction of the primary shaft member 41 relative to the primary shaft member 41, the female screw 73c of the movable screw part 73a directly makes contact with and slides on the male screw 74b of the fixed screw part 74a. In other words, the female screw 73c of the movable screw part 73a and the male screw 74b of the fixed screw part 74a constitute a slide portion 70 where the primary movable sheave 44 slides on the primary shaft member 41 when the primary movable sheave 44 moves in the rotational axis direction of the primary shaft member 41 relative to the primary shaft member 41. This slide portion 70 is different from the slide portion 48 between the primary movable sheave 44 and the primary shaft member 41. The female screw 73c of the movable screw part 73a and the male screw 74b of the fixed screw part 74a are members that do not directly make contact with the primary shaft member 41 and the primary movable sheave 44 and are provided between the primary shaft member 41 and the primary movable sheave 44. The female screw 73c of the movable screw part 73a and the male screw 74b of the fixed screw part 74a are provided between the slide member 44a of the primary movable sheave 44 and the primary shaft member 41 through the intermediary of the moving member bearing 75 and the rotating member bearing 76. The slide member 44a of the primary movable sheave 44, the moving member bearing 75, the movable screw part 73a, the fixed screw part 74a, and the rotating member bearing 76 constitute a later-described lubrication chamber forming portion 90. The female screw 73c of the movable screw part 73a and the male screw 74b of the fixed screw part 74a are lubricated by oil in the lubrication chamber 90a.

When the moving member bearing 75 is arranged so that a seal plate is provided on one surface in the rotational axis direction of the primary shaft member 41, the moving bodies, the inner race, and the outer race of the moving member bearing 75 are lubricated by oil in the lubrication chamber 90a or splashed oil in the lubrication space 22c. When the rotating member bearing 76 is arranged so that a seal plate is provided on one surface in the rotational axis direction of the primary shaft member 41, the moving bodies, the inner race, and the outer race of the rotating member bearing 76 are lubricated by oil in the lubrication chamber 90a or splashed oil in the lubrication space 22c. When the moving member bearing 75 is arranged so that seal plates are provided on both surfaces in the rotational axis direction of the primary shaft member 41, the moving bodies, the inner race, and the outer race of the moving member bearing 75 are lubricated by oil in the internal gap 75a. When the rotating member bearing 76 is arranged so that seal plates are provided on both surfaces in the rotational axis direction of the primary shaft member 41, the moving bodies, the inner race, and the outer race of the rotating member bearing 76 are lubricated by oil in the internal gap 76a. When the moving member bearing 75 is arranged so that a seal plate is provided so that a gap is formed between the seal plate and at least one surface in the rotational axis direction of the primary shaft member 41, the moving bodies, the inner race, and the outer race of the moving member bearing 75 are lubricated by oil in the lubrication chamber 90a or splashed oil in the lubrication space 22c. When the rotating member bearing 76 is arranged so that a seal plate is provided so that a gap is formed between the seal plate and at least one surface in the rotational axis direction of the primary shaft member 41, the moving bodies, the inner race, and the outer race of the rotating member bearing 76 are lubricated by oil in the lubrication chamber 90a or splashed oil in the lubrication space 22c.

The rotating member 74 is rotated by the rotational force transmitted from the rotational force transmission mechanism 80. In other words, the fixed screw part 74a is rotated by the rotational force transmitted from the rotational force transmission mechanism 80. Meanwhile, the relative moving member 73 is arranged not to be rotatable. In other words, the movable screw part 73a is arranged not to be rotatable. With this arrangement, the movable screw part 73a engaged with the fixed screw part 74a moves in the rotational axis direction of the primary shaft member 41. To put it differently, on account of the rotational force of the rotating member 74, the relative moving member 73 is arranged to be movable in the rotational axis direction of the primary shaft member 41, relative to the rotating member 74. As the movable screw part 73a moves in the rotational axis direction of the primary shaft member 41, the slide member 44a of the primary movable sheave 44 moves in the rotational axis direction of the primary shaft member 41. The moving direction of the relative moving member 73 in the rotational axis direction of the primary shaft member 41 is changed by whether the rotating member 74 rotates forward or in reverse. In other words, when the primary movable sheave 44 moves in the rotational axis direction of the primary movable sheave 44 relative to the primary movable sheave 44, the spline 44c of the primary movable sheave 44 directly makes contact with the slit 44b of the collar member 43b of the primary shaft member 41.

The primary movable sheave 44 shifts from the top position to the low position as it moves in the rotational axis direction of the primary shaft member 41. As the primary movable sheave 44 moves rightward in the vehicle left-right direction along the rotational axis direction of the primary shaft member 41, the rotation stopper 77a of the relative moving member 73 hits one of the three bolts 79a. As a result, the relative moving member 73 becomes immovable in the rotational axis direction of the primary shaft member 41. In other words, the three bolts 79a prohibit the relative moving member 73 from moving in the rotational axis direction of the primary shaft member 41. A position where the three bolts 79a make contact with the sheave-side gear 79 is the low position of the primary movable sheave 44. With a left end portion of the outer circumferential surface of the collar member 43a, a support member 44e is coupled at a position in contact with the primary fixed sheave 45. The support member 44e is formed to be substantially cylindrical in shape. As the primary movable sheave 44 moves leftward in the vehicle front-rear direction along the rotational axis direction of the primary shaft member 41, the primary movable sheave 44 makes contact with the support member 44e. The position where the primary movable sheave 44 is in contact with the support member 44e is the top position of the movable sheave 44.

The rotational force transmission mechanism 80 includes an output gear 81, a rotational force transmission gear 82, a rotational shaft 82a, and a rotating member gear 83. The output gear 81, the rotational force transmission gear 82, the rotational shaft 82a, and the rotating member gear 83 are made of metal. The rotational force transmission mechanism 80 is provided in the lubrication space 22c.

The electric motor 86 shown in FIG. 5 is provided between the cylinder body 23 (see FIG. 4) and a throttle body (not shown). The electric motor 86 is fixed to an outer wall of the crankcase member 22 by a bolt 86a. The output gear 81 is formed on a rotational shaft 86b of the electric motor 86. The rotational shaft 86b of the electric motor 86 and the output gear 81 are provided in the lubrication space 22c.

The rotational force transmission mechanism 80 is configured to transmit the rotational force of the electric motor 86. The rotational force transmission mechanism 80 is configured to transmit the rotational force of the electric motor 86 to the sheave-side gear 79 of the primary movable sheave 44. The output gear 81 is molded integrally with the rotational shaft 86b. The output gear 81 is engaged with the rotational force transmission gear 82 (see FIG. 3). The rotating member gear 83 is fixed by pressure to the rotational shaft 82a. A left portion of the rotating member gear 83 is smaller in diameter than a right portion thereof. The rotational force transmission gear 82 is fixed by pressure to the left portion of the rotating member gear 83. The rotating member gear 83 rotates in accordance with the rotation of the rotational force transmission gear 82. The rotating member gear 83 is engaged with the sheave-side gear 79. In other words, the rotating member gear 83 is engaged with the sheave-side gear 79 of the rotating member 74 of the rotational force conversion mechanism 72, and is rotated by the rotational force of the electric motor 86.

The rotational force transmission gear 82 and the rotational shaft 82a constitute a rotational force transmission gear mechanism 84. Both end portions of the rotational shaft 82a are supported by the crankcase member 22 to be immovable in the rotational axis direction of the rotational shaft 82a. The rotational force transmission gear 82 is longer in outer diameter than the output gear 81. The rotating member gear 83 is shorter in outer diameter than the rotational force transmission gear 82. The sheave-side gear 79 is longer in outer diameter than the rotating member gear 83. The rotation speed of the electric motor 86 is decreased by the rotational force transmission mechanism 80.

As shown in FIG. 3 and FIG. 5, the rotational force transmission mechanism 80 is provided to overlap the crankcase member 22 when the engine unit 106 is viewed in the vehicle left-right direction. The rotational force transmission mechanism 80 is exposed to the lubrication space 22c. The rotational shaft 86b and the rotational shaft 82a are provided above the right portion of the primary shaft member 41.

As shown in FIG. 5, a moving distance detection unit 85 is provided to the left of the sheave-side gear 79 in the vehicle left-right direction. The moving distance detection unit 85 is provided in the crankcase member 22. A sensor shaft 85a of the moving distance detection unit 85 is provided to be in parallel to a direction perpendicular to the rotational axis of the primary shaft member 41. An end portion of the sensor shaft 85a is supported by the crankcase member 22 (see FIG. 2). A sensor arm 85b is attached to the sensor shaft 85a. The sensor arm 85b makes contact with the relative moving member 73 and rotates. To be more specific, the sensor arm 85b makes contact with the movable screw part 73a of the relative moving member 73 and rotates. The sensor arm 85b has a cutout portion 85c at an outer circumference part. The cutout portion 85c is in contact with an end portion of the movable screw part 73a. The cutout portion 85c is arranged to be always in contact with the end portion of the movable screw part 73a which is movable in the rotational axis direction of the primary shaft member 41. As the movable screw part 73a moves in the rotational axis direction of the primary shaft member 41, the cutout portion 85c in contact with the movable screw part 73a moves in the rotational axis direction of the primary shaft member 41 and hence the sensor arm 85b rotates. In other words, when the primary pulley 42 moves between the low position and the top position, the sensor arm 85b in contact with the movable screw part 73a rotates. In this way, the moving distance detection unit 85 detects the moved position of the relative moving member 73 in the rotational axis direction of the primary shaft member. In other words, the moving distance detection unit 85 detects the moving distance of the slide member 44a of the primary movable sheave 44 in the rotational axis direction of the primary shaft member 41. The moving distance detection unit 85 is provided in the lubrication space 22c.

The primary movable sheave movement mechanism 40 includes the lubrication chamber forming portion 90. The lubrication chamber forming portion 90 is provided inside the lubrication space 22c. The lubrication chamber forming portion 90 is constituted by the slide member 44a of the primary movable sheave 44, the collar member 43b of the primary shaft member 41, the sealing member 44d, the moving member bearing 75, the movable screw part 73a, the fixed screw part 74a, and the rotating member bearing 76. The lubrication chamber forming portion 90 forms the lubrication chamber 90a. The lubrication chamber 90a accommodates the above-described slide portion 48 between the primary movable sheave 44 and the primary shaft member 41. As described above, the slide portion 48 between the primary movable sheave 44 and the primary shaft member 41 corresponds to the spline 44c of the slide member 44a of the primary movable sheave 44 and the slit 44b of the collar member 43b of the primary shaft member 41.

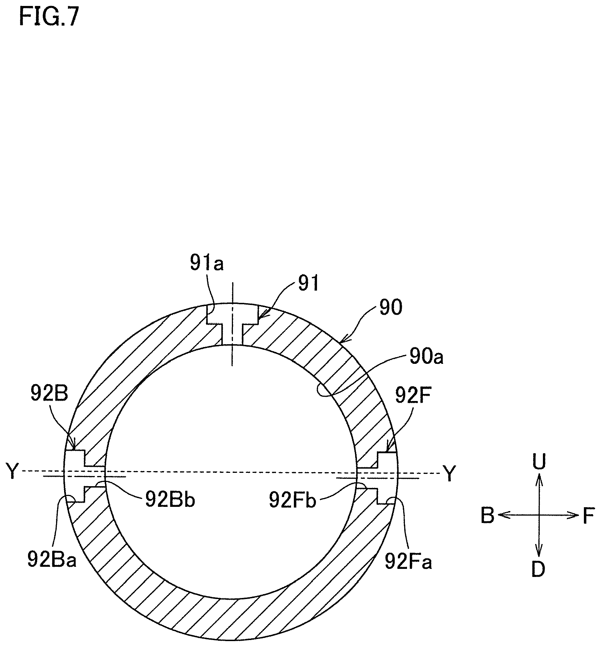

As shown in FIG. 5, FIG. 6, and FIG. 7, the lubrication chamber forming portion 90 has a lubricant injection hole 91 and a lubricant discharge hole 92. The lubricant injection hole 91 is formed in an upper portion of the movable screw part 73a. The lubricant injection hole 91 has a cylindrical outer hole portion 91a and a cylindrical inner hole portion 91b that are different from each other in outer diameter. The outer hole portion 91a and the inner hole portion 91b are lined up in the up-down direction. The outer hole portion 91a and the inner hole portion 91b communicate with each other. The outer hole portion 91a is open on the outer circumferential surface of the fixed screw part 74a. The inner hole portion 91b is open on the inner circumferential surface of the movable screw part 73a. The outer hole portion 91a is longer in diameter than the inner hole portion 91b. To put it differently, the lubricant injection hole 91 is arranged so that the size of the open end formed on the outer surface of the lubrication chamber forming portion 90 is larger than the size of the open end formed on the inner surface of the lubrication chamber forming portion 90. The lubricant injection hole 91 allows the lubrication space 22c and the lubrication chamber 90a to communicate with each other. This lubrication space 22c is a space formed by the crankcase member 22. The lubricant injection hole 91 is formed to allow the oil in the lubrication space 22c to be injected to the lubrication chamber 90a. The oil injected into the lubrication chamber 90a is therefore identical with the oil existing in the lubrication space 22c formed by the crankcase member 22. The movable screw part 73a moves in the rotational axis direction of the primary shaft member 41 but is immovable in the circumferential direction of the primary shaft member 41. For this reason, in the circumferential direction of the primary shaft member 41, the position of the lubricant injection hole 91 relative to the primary shaft member 41 is fixed. The lubricant injection hole 91 is formed so that the central axial line (one-dot chain line in FIG. 7) of the lubricant injection hole 91 extends along the radial direction of the primary shaft member 41. The lubricant injection hole 91 is provided so that the central axial line of the lubricant injection hole 91 passes through the center line of the primary shaft member 41. The lubricant injection hole 91 is provided so that its central axial line extends along the vertical direction (up-down direction).

The oil in the lubrication space 22c drops by its own weight and is injected through the lubricant injection hole 91, and adheres to the slit 44b of the collar member 43b of the primary shaft member 41. In this way, the slit 44b of the collar member 43b of the primary shaft member 41 is lubricated by the oil. As the slit 44b of the collar member 43b of the primary shaft member 41 is lubricated, the spline 44c of the slide member 44a of the primary movable sheave 44, which is in contact with the slit 44b of the collar member 43b of the primary shaft member 41, is lubricated. The lubricant injection hole 91 is arranged to allow the oil in the lubrication space 22c to be injected into the lubrication chamber 90a in order to lubricate the slide portion 48 between the primary movable sheave 44 and the primary shaft member 41.

The oil in the lubrication chamber 90a may lubricate a slide portion 70 which is different from the slide portion 48 and is a portion where the primary movable sheave 44 and the primary shaft member 41 slide with each other when the primary movable sheave 44 moves in the rotational axis direction of the primary shaft member 41 relative to the primary shaft member 41. The slide portion 70 is a portion that is not directly in contact with either the primary shaft member 41 or the primary movable sheave 44, and is a portion where the primary shaft member 41 and the primary movable sheave 44 indirectly make contact with each other through another member and slide with each other. The slide portion 70 is a portion where members that are provided between the primary shaft member 41 and the primary movable sheave 44 and constitute the lubrication chamber forming portion 90 directly make contact with each other and slide with each other when the primary movable sheave 44 moves in the rotational axis direction of the primary shaft member 41 relative to the primary shaft member 41. Specifically, the slide portion 70 corresponds to the female screw 73c of the movable screw part 73a, the male screw 74b of the fixed screw part 74a, the spline 44c of the slide member 44a of the primary movable sheave 44, and the slit 44b of the collar member 43b of the primary shaft member 41.

The lubricant discharge hole 92 is constituted by two lubricant discharge holes 92F and 92B formed in the movable screw part 73a. Each of the lubricant discharge hole 92F and the lubricant discharge hole 92B is partially formed in a lower portion of the movable screw part 73a. The lubricant discharge hole 92F has a cylindrical outer hole portion 92Fa and a cylindrical inner hole portion 92Fb that extend in the front-rear direction and in the up-down direction in a front portion of the movable screw part 73a. The outer hole portion 92Fa and the inner hole portion 92Fb communicate with each other. The outer hole portion 92Fa is open on the outer circumferential surface of the fixed screw part 74a. The inner hole portion 92Fb is open on the inner circumferential surface of the movable screw part 73a. The lubricant discharge hole 92F allows the lubrication space 22c and the lubrication chamber 90a to communicate with each other. The lubricant discharge hole 92F is arranged to allow the oil in the lubrication chamber 90a to be discharged to the lubrication space 22c. The lubricant discharge hole 92B has a cylindrical outer hole portion 92Ba and a cylindrical inner hole portion 92Bb that extend in the front-rear direction and in the up-down direction in a rear portion of the movable screw part 73a. The outer hole portion 92Ba and the inner hole portion 92Bb communicate with each other. The outer hole portion 92Ba is open on the outer circumferential surface of the fixed screw part 74a. The inner hole portion 92Bb is open on the inner circumferential surface of the movable screw part 73a. The lubricant discharge hole 92B allows the lubrication space 22c and the lubrication chamber 90a to communicate with each other. The lubricant discharge hole 92B is arranged to allow the oil in the lubrication chamber 90a to be discharged to the lubrication space 22c. The movable screw part 73a moves in the rotational axis direction of the primary shaft member 41 but is immovable in the circumferential direction of the primary shaft member 41. For this reason, in the circumferential direction of the primary shaft member 41, the positions of the lubricant discharge holes 92F and 92B relative to the primary shaft member 41 are fixed. Each of the lubricant discharge holes 92F and 92B is provided so that its central axial line extends along the horizontal direction. In other words, each of the lubricant discharge holes 92F and 92B is provided so that its central axial line (see one-dot chain lines in FIG. 7) does not extend along the vertical direction.

### [Operation of Primary Movable Sheave Movement Mechanism of Electronically-Controlled Continuously Variable Transmission]

The following will describe an operation of the primary movable sheave movement mechanism 40 of the electronically-controlled continuously variable transmission 30 with reference to FIG. 5.

As the engine rotation speed increases in accordance with acceleration, shifting is performed based on a transmission ratio set in advance in accordance with the engine rotation speed. The primary movable sheave movement mechanism 40 of the electronically-controlled continuously variable transmission 30 controls the rotation of the electric motor 86 so that the winding diameter of the dry belt 32 is equal to a winding diameter set in accordance with the transmission ratio. The output gear 81 rotates in accordance with the rotation of the electric motor 86. The rotational force transmission gear 82 rotates in accordance with the rotation of the output gear 81 engaged with the gear 82. The rotating member gear 83 rotates in accordance with the rotation of the rotational force transmission gear 82 that is fixed to the same rotational shaft 82a as the rotating member gear 83. The sheave-side gear 79 rotates in accordance with the rotating member gear 83 engaged with the sheave-side gear 79. As the sheave-side gear 79 rotates, the rotating member 74 fixed to the sheave-side gear 79 rotates. Then the relative moving member 73 engaged with the rotating member 74 moves in the rotational axis direction of the primary shaft member 41. The relative moving member 73 moves in the rotational axis direction of the primary shaft member 41 by the distance corresponding to the rotational amount of the electric motor 86. Accordingly, the primary movable sheave 44 moves toward the top position by a predetermined distance. To put it differently, the rotational force conversion mechanism 72 continuously changes the width of the primary pulley 42 on which the dry belt 32 is wound. The width of the primary pulley 42 becomes identical with the belt winding diameter having been set. In other words, the rotational force conversion mechanism 72 continuously changes the winding diameter of the dry belt 32 wound onto the primary pulley 42. As such, the electronically-controlled continuously variable transmission 30 is able to control the transmission ratio by the electric motor 86, in a stepless manner.

In addition to the effects of the engine unit 6 of the above-described embodiment of the present teaching, the engine unit 106 of Specific Example 1 of the embodiment of the present teaching exerts the following effects.

The lubrication chamber forming portion 90 is provided inside the lubrication space 22c formed by the crankcase member 22. The lubricant (oil) injected into the lubrication chamber 90a is identical with the lubricant existing in the lubrication space 22c formed by the crankcase member 22. In this regard, an amount of the lubricant in the lubrication space 22c formed by the crankcase member 22 is large. It is therefore possible to inject, into the lubrication chamber 90a in which the slide portion 70 between the primary movable sheave 44 and the primary shaft member 41 is accommodated, a larger amount of lubricant existing in the lubrication space 22c formed by the crankcase member 22. With this arrangement, heat generated at the slide portion 70 between the primary movable sheave 44 and the primary shaft member 41 is absorbed more by the lubricant in the lubrication chamber 90a and is discharged more to the outside of the lubrication chamber 90a together with the lubricant. This makes it possible to further prevent increase in temperature of the slide portion 70 between the primary movable sheave 44 and the primary shaft member 41. Furthermore, the slide portion 70 between the primary movable sheave 44 and the primary shaft member 41 is lubricated by a larger amount of lubricant. As a result, a friction state of the slide portion 70 between the primary movable sheave 44 and the primary shaft member 41 accommodated in the lubrication chamber 90a is further stabilized and frictional heat is further suppressed. The temperature around the primary pulley 42 is therefore decreased, and thermal deterioration of the dry belt 32 is suppressed.

The lubricant injection hole 91 is formed in the upper portion of the lubrication chamber forming portion 90. In this regard, the lubricant flows downward in the vertical direction by the force of gravity. Because the lubricant injection hole 91 is formed in the upper portion of the lubrication chamber forming portion 90 in a state of use of the engine unit 106, injection of the lubricant into the lubrication chamber 90a is facilitated. The temperature around the primary pulley 42 is therefore decreased, and thermal deterioration of the dry belt 32 is suppressed.

The lubricant discharge hole 92 is at least partially provided in the lower portion of the lubrication chamber forming portion 90. In this regard, the lubricant flows downward in the vertical direction by the force of gravity. Because the lubricant discharge hole 92 is at least partially formed in the lower portion of the lubrication chamber forming portion 90 in a state of use of the engine unit 106, discharge of the lubricant from the lubrication chamber 90a is facilitated. The temperature around the primary pulley 42 is therefore decreased, and thermal deterioration of the dry belt 32 is suppressed.

The lubricant injection hole 91 is formed so that the central axial line of the lubricant injection hole 91 extends along the radial direction of the primary shaft member 41. In this regard, the primary movable sheave 44 is moved by the primary movable sheave movement mechanism 40 in the rotational axis direction of the primary shaft member 41 relative to the primary shaft member 41. The lubrication chamber 90a formed by the lubrication chamber forming portion 90 is therefore varied in the rotational axis direction of the primary shaft member 41. Because the lubrication chamber 90a is changed in the rotational axis direction of the primary shaft member 41 and is less likely to be varied in the radial direction, it is difficult to inject lubricant into the lubrication chamber 90a when, for example, the lubricant injection hole 91 is formed so that its central axial line extends along the rotational axis direction of the primary shaft member 41. Meanwhile, injection of the lubricant into the lubrication chamber 90a is facilitated when the lubricant injection hole 91 is formed so that its central axial line extends along the radial direction of the primary shaft member 41. The temperature around the primary pulley 42 is therefore decreased, and thermal deterioration of the dry belt 32 is suppressed.

The lubricant injection hole 91 is provided so that its central axial line extends along the vertical direction. In this regard, the lubricant flows downward in the vertical direction by the force of gravity. Injection of the lubricant into the lubrication chamber 90a is further facilitated when the lubricant injection hole 91 is formed so that its central axial line extends along the vertical direction. The temperature around the primary pulley 42 is therefore decreased, and thermal deterioration of the dry belt 32 is suppressed.

The lubricant discharge hole 92 is provided so that its central axial line does not extend in the vertical direction. In this regard, the lubricant flows downward in the vertical direction by the force of gravity. Because the lubricant discharge hole 92 is formed so that the central axial line of the lubricant discharge hole 92 does not extend in the vertical direction, the lubricant is accumulated at the lower portion of the lubrication chamber 90a while the lubricant is discharged from the lubrication chamber 90a. As the lubricant is accumulated at the lower portion of the lubrication chamber 90a, the lubrication of the slide portion 70 between the primary movable sheave 44 and the primary shaft member 41, which is accommodated in the lubrication chamber 90a, is ensured, with the result that the friction state of the slide portion is stabilized. As a result, heat generation by friction at the slide portion 70 between the primary movable sheave 44 and the primary shaft member 41 is suppressed. The temperature around the primary pulley 42 is therefore decreased, and thermal deterioration of the dry belt 32 is suppressed.

The size of the outer hole portion 91a of the lubricant injection hole 91, which is formed on the outer surface of the lubrication chamber forming portion 90, is larger than the size of the inner hole portion 91b of the lubricant injection hole 91, which is formed on the inner surface of the lubrication chamber forming portion 90. Injection of the lubricant into the lubrication chamber 90a is further facilitated by this arrangement. The temperature around the primary pulley 42 is therefore decreased, and thermal deterioration of the dry belt 32 is suppressed.

The moving member bearing 75 and the rotating member bearing 76 are seal bearings. In each seal bearing, a seal plate is provided on at least one surface in the rotational axis direction of the primary shaft member 41. The seal bearing is therefore sealed on one side or both sides. When each of the moving member bearing 75 and the rotating member bearing 76 is a seal bearing that is sealed on one side or both sides, the lubricant is stored in the lubrication chamber 90a in which the slide portion 70 between the primary movable sheave 44 and the primary shaft member 41 is accommodated, without allowing the lubricant to be discharged through a gap in the bearing. The temperature around the primary pulley 42 is therefore decreased, and thermal deterioration of the dry belt 32 is suppressed.

Each of the moving member bearing 75 and the rotating member bearing 76 may be a seal bearing in which a seal plate is provided so that a gap exists at one or both of surfaces in the rotational axis direction of the primary shaft member 41. This seal bearing is a so-called contactless seal bearing. When each of the moving member bearing 75 and the rotating member bearing 76 is a so-called contactless seal bearing, loss due to the friction between the primary shaft member 41 and the seal bearing is decreased. The temperature around the primary pulley 42 is therefore decreased, and thermal deterioration of the dry belt 32 is suppressed.

### (Modification of Specific Example 1)

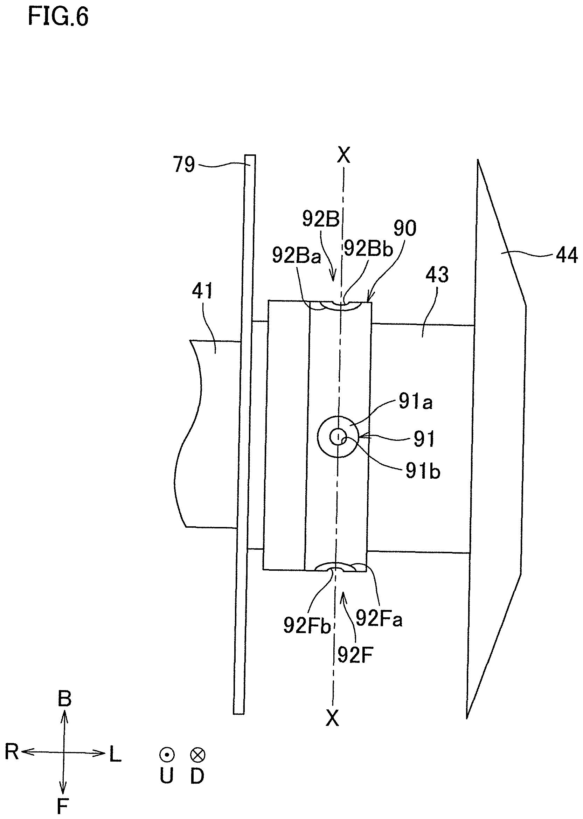

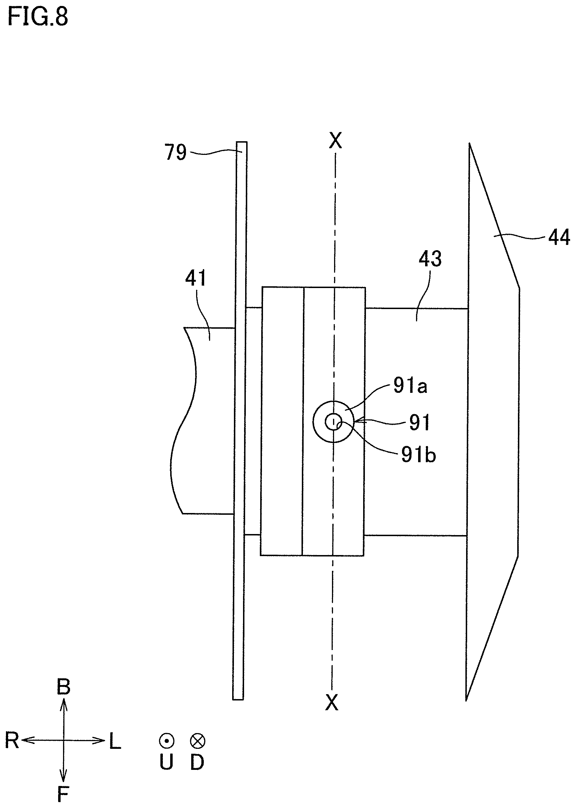

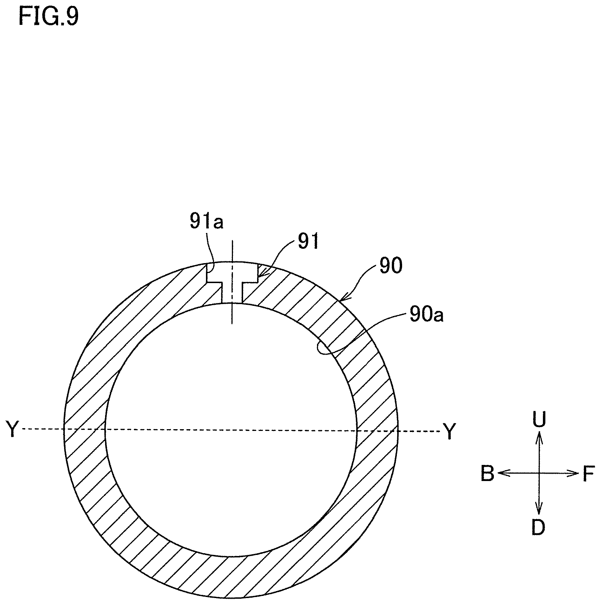

An engine unit 406 of a modification of Specific Example 1 will be described with reference to FIG. 8 and FIG. 9. FIG. 8 and FIG. 9 show an engine unit 106 of a modification of Specific Example 1, which is partially different from the engine unit 106 of Specific Example 1 shown in FIG. 6 and FIG. 7. It is noted that items identical with those of the Specific Example 1 are indicated by the same reference numerals and detailed descriptions thereof are suitably omitted.

In a moving member bearing 75, a seal plate is not provided on at least one of surfaces in the rotational axis direction of the primary shaft member 41. In short, the moving member bearing 75 is not a seal bearing. In a rotating member bearing 76, a seal plate is not provided on either surface in the rotational axis direction of the primary shaft member 41. In short, the rotating member bearing 76 is not a seal bearing.

Lubricant discharge holes 92F and 92B are not formed in a movable screw part 73a. The lubricant discharge hole 92 is an internal gap 75a in the moving member bearing 75. The internal gap 75a in the moving member bearing 75, which is the lubricant discharge hole 92, causes a lubrication space 22c and a lubrication chamber 90a to communicate with each other. The internal gap 75a in the moving member bearing 75, which is the lubricant discharge hole 92, is arranged to be able to discharge oil in the lubrication chamber 90a to the lubrication space 22c. In addition, the lubricant discharge hole 92 is an internal gap 76a in the rotating member bearing 76. The internal gap 76a in the rotating member bearing 76, which is the lubricant discharge hole 92, causes a lubrication space 22c and a lubrication chamber 90a to communicate with each other. The internal gap 76a in the rotating member bearing 76, which is the lubricant discharge hole 92, is arranged to be able to discharge oil in the lubrication chamber 90a to the lubrication space 22c.

In addition to the effects of the engine unit 6 of the above-described embodiment of the present teaching and the effects of the engine unit 106 of Specific Example 1, the engine unit 106 of the modification of Specific Example 1 of the embodiment of the present teaching exerts the following effects.

The lubrication chamber forming portion 90 includes the moving member bearing 75 and the rotating member bearing 76 that are bearings attached to the primary shaft member 41. The lubricant discharge hole 92 is the internal gap 75a in the moving member bearing 75, which is formed between moving bodies and the inner race and between the moving bodies and the outer race. The lubricant discharge hole 92 is the internal gap 76a in the rotating member bearing 76, which is formed between moving bodies and the inner race and between the moving bodies and the outer race. This simple arrangement allows the lubricant to be discharged from the lubrication chamber 90a. The temperature around the primary pulley 42 is therefore decreased, and thermal deterioration of the dry belt 32 is suppressed.

### (Specific Example 2)

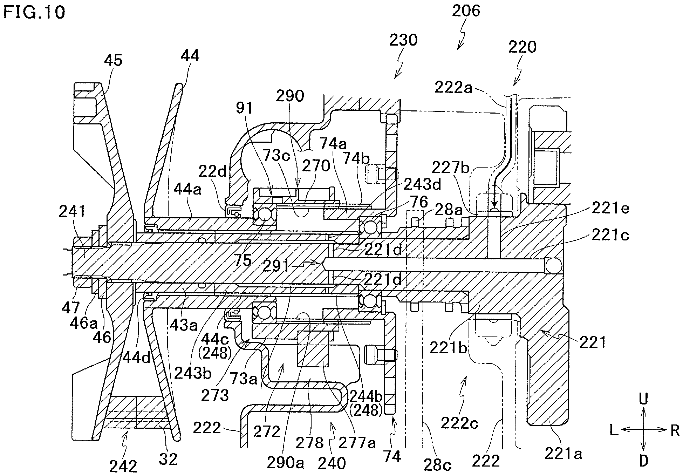

An engine unit 206 of Specific Example 2 will be described with reference to FIG. 10. FIG. 10 shows an engine unit 206 of Specific Example 2, which is partially different from the engine unit 106 of Specific Example 1 shown in FIG. 5. In FIG. 10, a moving distance detection unit 85 of the engine unit 206 is not shown.

As shown in FIG. 10, the engine unit 206 includes an engine main body unit 220 and an electronically-controlled continuously variable transmission 230. The engine main body unit 220 includes a crankcase member 222 and a crankshaft member 221. The crankshaft member 221 includes two crank webs 221a and two crank main shaft members 221b. In FIG. 10, only one of the two crank webs 221a and only one of the two crank main shaft members 221b are shown. The two crank webs 221a are provided between the two crank main shaft members 221b. A bearing 227b is provided to the right of the right crank web 221a in the vehicle left-right direction. A bearing (not illustrated) is provided to the left of the left crank web (not illustrated) in the vehicle left-leftward direction. The crankshaft member 221 is supported by the crankcase member 222 via the bearing 27a and the bearing. A driving cam chain sprocket 28a is fitted to the crankshaft member 221. In a cylinder head (not illustrated), a driven cam chain sprocket (not illustrated) is provided. A cam chain 28c is provided to bridge the driving cam chain sprocket 28a and the driven cam chain sprocket. The crankcase member 222 forms a lubrication space 222c in which lubricant is provided.

The electronically-controlled continuously variable transmission 230 includes a primary pulley 242, a secondary pulley (not illustrated), a dry belt 32, a dry belt casing (not illustrated), and a primary movable sheave movement mechanism 240. The primary movable sheave movement mechanism 240 includes a rotational force conversion mechanism 272 and a rotational force transmission mechanism (not illustrated). The rotational force conversion mechanism 272 includes a relative moving member 273 and a rotating member 74. The relative moving member 273 includes a cylindrical movable screw part 73a, a moving member bearing 75, and a ring member 277. The ring member 277 is immovable in the rotational axis direction of the primary movable sheave 44. In the ring member 277, a rotation stopper 277a is formed to form a hole portion. Into the hole portion formed in the rotation stopper 277a, an insertion 278 integrally formed with the crankcase member 222 is inserted. As the insertion 278 is inserted into the rotation stopper 277a, the ring member 277 is not rotatable in the rotational direction of the primary movable sheave 44. In other words, due to the ring member 277, the relative moving member 273 is not rotatable in the rotational direction of the primary movable sheave 44.

The primary pulley 242 is attached to the primary shaft member 241. The primary shaft member 241 is provided at the left end in the vehicle left-right direction of the crankshaft member 221. The primary shaft member 241 is integrally molded with the crankshaft member 221. The primary pulley 242 includes a primary movable sheave 44 and a primary fixed sheave 45. The primary shaft member 241 has a collar member 43a and a collar member 243b on the outer circumferential surface. The collar member 43a and the collar member 243b are cylindrical in shape. The collar member 43a and the collar member 243b are connected to each other. The collar member 43a and the collar member 243b are fastened to the primary shaft member 241 by a locknut 47 through a spacer 46 and a disc spring 46a.

The collar member 43a and the collar member 243b are arranged to be immovable in the rotational axis direction of the primary shaft member 241 and the rotational direction of the primary movable sheave 44. A recess 243c is formed between the inner circumferential surface of the collar member 243b and the primary shaft member 241. Furthermore, collar hole portions 243d are formed in the collar member 243b. Each of the collar hole portions 243d is formed so that its central axial line penetrates the collar member 243b in the radial direction of the primary shaft member 241. When viewed in the rotational axis direction of the primary shaft member 241, each collar hole portion 243d is arranged so that an outer end in the radial direction of the primary shaft member 241 is connected to a later-described lubrication chamber 290a whereas an inner end in the radial direction of the primary shaft member 241 is connected to the recess 243c. The collar member 43a and the collar member 243b rotate together with the crankshaft member 221 and the primary shaft member 241. The collar member 43a is provided to the right of the primary fixed sheave 45 in the vehicle left-right direction. The collar member 243b is provided to the right of the collar member 43a in the vehicle left-right direction. The primary movable sheave 44 is provided on the outer circumferential surfaces of the collar member 43a and the collar member collar member 243b.

A spline 44c on the inner circumferential surface of a slide member 44a of the primary movable sheave 44 is inserted into a slit 244b of the collar member 243b of the primary shaft member 241. The spline 44c is arranged to be movable along the slit 244b in the rotational axis direction of the primary shaft member 241. The primary movable sheave 44 is therefore movable along the slit 244b of the collar member 243b in the rotational axis direction of the primary movable sheave 44. Meanwhile, the spline 44c is arranged to be immovable in the slit 44b in the rotational direction of the primary movable sheave 44. The primary movable sheave 44 therefore rotates together with the crankshaft member 221 and the primary shaft member 241. The spline 44c of the slide member 44a of the primary movable sheave 44 and the slit 244b of the collar member 243b of the primary shaft member 241 directly make contact with each other, when the primary movable sheave 44 is moved by the primary movable sheave movement mechanism 240 in the rotational axis direction of the primary shaft member 241 relative to the primary shaft member 241. To put it differently, the spline 44c of the slide member 44a of the primary movable sheave 44 and the slit 244b of the collar member 243b of the primary shaft member 241 constitute a slide portion 248 between the primary movable sheave 44 and the primary shaft member 241.

The primary movable sheave movement mechanism 240 includes a lubrication chamber forming portion 290. The lubrication chamber forming portion 290 is provided inside the lubrication space 222c. The lubrication chamber forming portion 290 is constituted by the slide member 44a of the primary movable sheave 44, the collar member 243b of the primary shaft member 241, the sealing member 44d, the moving member bearing 75, the movable screw part 73a, the fixed screw part 74a, and the rotating member bearing 76. The lubrication chamber forming portion 290 forms the lubrication chamber 290a. The lubrication chamber 290a accommodates the slide portion 248 between the primary movable sheave 44 and the primary shaft member 241, which is a portion where the primary movable sheave 44 and the primary shaft member 241 slide with each other when the primary movable sheave 44 is moved by the primary movable sheave movement mechanism 240 in the rotational axis direction of the primary shaft member 241 relative to the primary shaft member 241. The slide portion 248 between the primary movable sheave 44 and the primary shaft member 241 corresponds to the spline 44c of the slide member 44a of the primary movable sheave 44 and the slit 244b of the collar member 243b of the primary shaft member 241.

The lubrication chamber forming portion 290 has lubricant injection holes 91 and 291 and a lubricant discharge hole (not shown). This lubricant discharge hole is identical with the lubricant discharge hole of Specific Example 1 and is not explained. In Specific Example 2, the lubrication chamber forming portion 290 may not have the lubricant injection hole 91.

The lubricant injection hole 291 is constituted by a crankcase oil passage member 222a, oil passage members 221e and 221c, oil branched passage members 221d, a recess 243c, and collar hole portions 243d. The number of the oil branched passage members 221d may be one. The crankshaft member 221 and the primary shaft member 241 form the oil passage member 221c therein. The crankshaft member 221 forms the oil passage member 221e therein. The primary shaft member 241 forms the oil branched passage members 221d therein. The crankcase member 222 forms the crankcase oil passage member 222a therein. The oil passage member 221e is connected to the crankcase oil passage member 222a through a bearing 227b. The oil passage member 221c is connected to the oil passage member 221e. The oil passage member 221c is provided at the center of the crankshaft member 221 and the primary shaft member 241 and extends along the rotational axis direction of the primary shaft member 241. The right end of the oil passage member 221c is at the crank web 221a. The left end of the oil passage member 221c is at the primary shaft member 241 which is to the left of the rotating member bearing 76. The oil branched passage members 221d are connected to a left end portion of the oil passage member 221c. The oil branched passage members 221d are provided to extend along the radial direction of the primary shaft member 241. In the radial direction of the primary shaft member 241, the oil branched passage members 221d extend from the oil passage member 221c at the center of the primary shaft member 241 to the recess 243c formed between the collar member 243b and the primary shaft member 241.

The lubricant injection hole 291 is arranged to allow oil to flow in the crankcase oil passage member 222a, the oil passage member 221c, the oil branched passage members 221d, the recess 243c, and the collar hole portions 243d. The oil flowing in the crankcase oil passage member 222a, the oil passage member 221c, the oil branched passage members 221d, the recess 243c, and the collar hole portions 243d is identical with the oil lubricating the inside of the lubrication space 222c. The lubricant injection hole 291 is arranged to allow the oil in the crankcase oil passage member 222a to flow into the oil passage member 221c through the bearing 227b. The lubricant injection hole 291 is arranged to allow the oil in the oil passage member 221c to pass through the oil branched passage members 221d and to be stored in the recess 243c formed between the collar member 243b and the primary shaft member 241. The lubricant injection hole 291 is arranged to allow the oil in the recess 243c to flow into the collar hole portions 243d and to be injected into the lubrication chamber 290a.

Because the collar hole portions 243d are formed in the collar member 243b, the oil injected from the collar hole portions 243d to the lubrication chamber 290a lubricates the slit 244b of the collar member 243b of the primary shaft member 241. As the slit 244b of the collar member 243b of the primary shaft member 241 is lubricated, the spline 44c of the slide member 44a of the primary movable sheave 44, which is in contact with the slit 244b of the collar member 243b of the primary shaft member 241, is lubricated. The spline 44c of the slide member 44a of the primary movable sheave 44 and the slit 244b of the collar member 243b of the primary shaft member 241 constitute a slide portion 248 between the primary movable sheave 44 and the primary shaft member 241. To put it differently, oil is injected through the lubricant injection hole 291 in order to lubricate the slide portion 248 between the primary movable sheave 44 and the primary shaft member 241.

The female screw 73c of the movable screw part 73a and the male screw 74b of the fixed screw part 74a forming the lubrication chamber forming portion 290 constitute a slide portion 270 that is different from the slide portion 248 between the primary movable sheave 44 and the primary shaft member 241. The slide portion 270 is a portion that is not directly in contact with either the primary shaft member 241 or the primary movable sheave 44, and is a portion where the primary shaft member 241 and the primary movable sheave 44 indirectly make contact with each other through another member and slide with each other. The slide portion 270 is a portion where members that are provided between the primary shaft member 241 and the primary movable sheave 44 and constitute the lubrication chamber forming portion 290 directly make contact with each other and slide with each other when the primary movable sheave 44 is moved by the primary movable sheave movement mechanism 240 in the rotational axis direction of the primary shaft member 241 relative to the primary shaft member 241. The slide portion 270 is lubricated by the oil in the lubrication chamber 290a.

In addition to the effects of the engine unit 6 of the above-described embodiment of the present teaching and the effects of the engine unit 106 of Specific Example 1, the engine unit 206 of Specific Example 2 of the embodiment of the present teaching exerts the following effects.

The lubricant injection hole 291 is constituted by the crankcase oil passage member 222a, the oil passage member 221c, the oil branched passage members 221d, the recess 243c, and the collar hole portions 243d. The lubricant injection hole 291 is formed to connect the inside of the primary shaft member 241 with the lubrication chamber 290a. The lubricant injection hole 291 formed to connect the inside of the primary shaft member 241 with the lubrication chamber 290a makes it possible to reliably inject lubricant into the lubrication chamber 290a in which the slide portion 248 between the primary movable sheave 44 and the primary shaft member 241 is accommodated. With this arrangement, heat generated at the slide portion 248 between the primary movable sheave 44 and the primary shaft member 241 is reliably absorbed by the lubricant in the lubrication chamber 290a and is reliably discharged to the outside of the lubrication chamber together with the lubricant. This makes it possible to further prevent increase in temperature of the slide portion 248 between the primary movable sheave 44 and the primary shaft member 241. Furthermore, the slide portion 248 between the primary movable sheave 44 and the primary shaft member 241 is further reliably lubricated by the lubricant. As a result, a friction state of the slide portion 248 between the primary movable sheave 44 and the primary shaft member 241 accommodated in the lubrication chamber 290a is further stabilized and frictional heat is further suppressed. The temperature around the primary pulley 242 is therefore decreased, and thermal deterioration of the dry belt 32 is suppressed.

### (Specific Example 3)

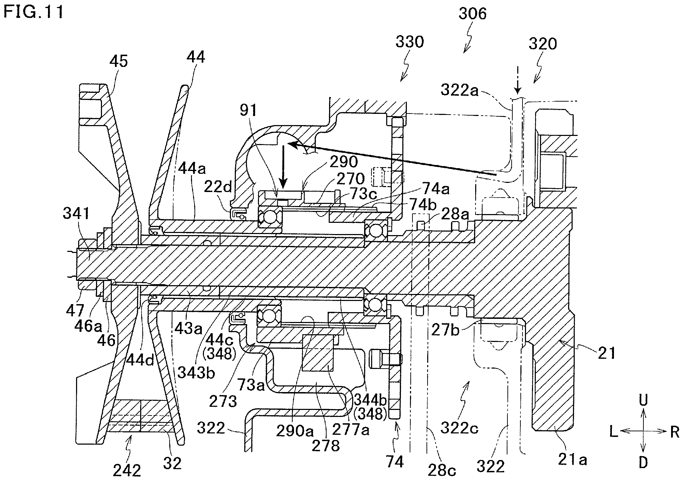

An engine unit 306 of Specific Example 3 will be described with reference to FIG. 11. FIG. 11 shows the engine unit 306 of Specific Example 3, which is partially different from the engine unit 206 of Specific Example 2 shown in FIG. 10. It is noted that items identical with those of the Specific Example 2 shown in FIG. 10 are indicated by the same reference numerals and detailed descriptions thereof are suitably omitted. In FIG. 11, a moving distance detection unit 85 of the engine unit 306 is not shown.

As shown in FIG. 11, the engine unit 306 includes an engine main body unit 320 and an electronically-controlled continuously variable transmission 330. The engine main body unit 320 includes a crankshaft member 21 and a crankcase member 322. The electronically-controlled continuously variable transmission 330 includes a primary pulley 242, a secondary pulley (not illustrated), a dry belt 32, a dry belt casing (not illustrated), and a primary movable sheave movement mechanism 240. The primary pulley 242 is attached to a primary shaft member 341. The primary shaft member 341 is structurally identical with the primary shaft member 41 of Specific Example 1. A collar member 343b is structurally identical with the collar member 243b of Specific Example 2 except that a recess 243c is not formed between the collar member 343b and the primary shaft member 241. The collar member 343b has a slit 344b. The crankcase member 322 forms a lubrication space 322c in which lubricant is provided. The spline 44c of the slide member 44a of the primary movable sheave 44 and the slit 344b of the collar member 343b of the primary shaft member 341 constitute a slide portion 348 between the primary movable sheave 44 and the primary shaft member 241.

The crankcase member 322 has a lubricant injector 322a therein. The lubricant injector 322a forms an oil flow passage and is arranged to inject oil in a predetermined direction. The oil flowing in the lubricant injector 322a is identical with the oil lubricating the inside of the lubrication space 322c. As indicated by arrows, the lubricant injector 322a injects oil in such a way that the oil colliding with a wall surface of the crankcase member 322 (colliding with the moving distance detection unit 85 in Specific Example 3 shown in FIG. 11) is supplied to the lubricant injection hole 91.

The oil injected by the lubricant injector 322a enters the lubrication chamber 90a through the lubricant injection hole 91 and is adhered to the slit 344b of the collar member 343b of the primary shaft member 341. In this way, the slit 344b of the collar member 343b of the primary shaft member 341 is lubricated by the oil. As the slit 344b of the collar member 343b of the primary shaft member 341 is lubricated, the spline 44c of the slide member 44a of the primary movable sheave 44, which is in contact with the slit 344b of the collar member 343b of the primary shaft member 341, is lubricated. The lubricant injection hole 91 is arranged to allow the oil to be injected into the lubrication chamber 90a in order to lubricate the slide portion 348 between the primary movable sheave 44 and the primary shaft member 341.

In addition to the effects of the engine unit 6 of the above-described embodiment of the present teaching and the effects of the engine unit 106 of Specific Example 1, the engine unit 306 of Specific Example 3 of the embodiment of the present teaching exerts the following effects.

The lubricant injector 322a makes it possible to reliably inject lubricant into the lubrication chamber 290a in which the slide portion 348 between the primary movable sheave 44 and the primary shaft member 341 is accommodated. With this arrangement, heat generated at the slide portion 348 between the primary movable sheave 44 and the primary shaft member 341 is reliably absorbed by the lubricant in the lubrication chamber 290a and is reliably discharged to the outside of the lubrication chamber 290a together with the lubricant. This makes it possible to further prevent increase in temperature of the slide portion 348 between the primary movable sheave 44 and the primary shaft member 341. Furthermore, the slide portion 348 between the primary movable sheave 44 and the primary shaft member 341 is further reliably lubricated by the lubricant. As a result, a friction state of the slide portion 348 between the primary movable sheave 44 and the primary shaft member 341 accommodated in the lubrication chamber 290a is further stabilized and frictional heat is further suppressed. The temperature around the primary pulley 242 is therefore decreased, and thermal deterioration of the dry belt 32 is suppressed.

### (Specific Example 4)

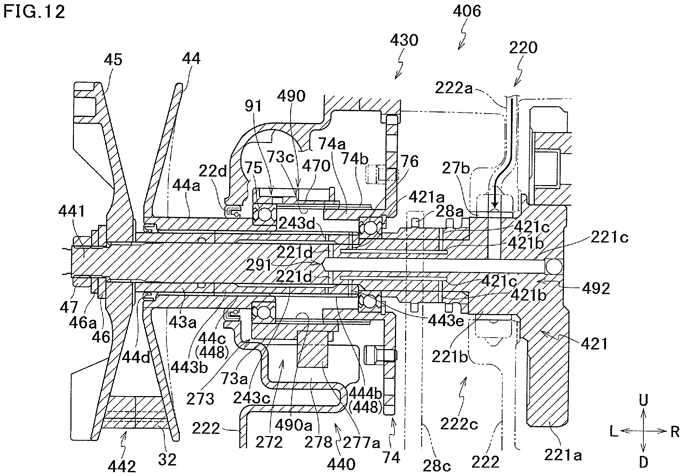

An engine unit 406 of Specific Example 4 will be described with reference to FIG. 12. FIG. 12 shows the engine unit 406 of Specific Example 3, which is partially different from the engine unit 206 of Specific Example 2 shown in FIG. 10. It is noted that items identical with those of the Specific Example 2 shown in FIG. 10 are indicated by the same reference numerals and detailed descriptions thereof are suitably omitted. In FIG. 12, a moving distance detection unit 85 of the engine unit 406 is not shown.

As shown in FIG. 12, the engine unit 406 includes an engine main body unit 220 and an electronically-controlled continuously variable transmission 430.

The electronically-controlled continuously variable transmission 430 includes a primary pulley 442, a secondary pulley (not illustrated), a dry belt 32, a dry belt casing (not illustrated), and a primary movable sheave movement mechanism 440. The primary movable sheave movement mechanism 440 includes a rotational force conversion mechanism 272 and a rotational force transmission mechanism (not illustrated). The rotational force conversion mechanism 272 includes a relative moving member 273 and a rotating member 74.

The primary pulley 442 is attached to a primary shaft member 441. The primary shaft member 441 is provided at the left end in the vehicle left-right direction of the crankshaft member 421. The primary shaft member 241 is integrally molded with the crankshaft member 421. The primary pulley 442 includes a primary movable sheave 44 and a primary fixed sheave 45. The primary shaft member 441 has a collar member 43a and a collar member 443b. The collar member 43a and the collar member 443b are cylindrical in shape. The collar member 43a and the collar member 443b are connected to each other. The collar member 43a and the collar member 443b are fastened to the primary shaft member 441 by a locknut 47 through a spacer 46 and a disc spring 46a. The collar member 43a and the collar member 443b are arranged to be immovable in the rotational axis direction of the primary shaft member 441 and the rotational direction of the primary movable sheave 44. A recess 243c is formed between the inner circumferential surface of the collar member 443b and the primary shaft member 441.

The collar member 443b includes collar hole portions 243d and collar discharge hole portions 443e. The number of the collar hole portions 243d may be one. The number of the collar discharge hole portions 443e may be one. The collar hole portions 243d and the collar discharge hole portions 443e are provided to penetrate the collar member 243b along the radial direction of the primary shaft member 441. Each of the collar hole portions 243d is arranged so that an outer end in the radial direction of the primary shaft member 441 is connected to a later-described lubrication chamber 490a whereas an inner end in the radial direction of the primary shaft member 441 is connected to the recess 243c. Each of the collar discharge hole portions 443e is arranged so that an outer end in the radial direction of the primary shaft member 441 is connected to a later-described lubrication chamber 290a whereas an inner end in the radial direction of the primary shaft member 441 is connected to a later-described oil merging discharge passage member 421a. The collar discharge hole portions 443e are provided to the right of the collar hole portions 243d. The collar member 43a and the collar member 443b rotate together with the crankshaft member 421 and the primary shaft member 441. The collar member 43a is provided to the right of the primary fixed sheave 45 in the vehicle left-right direction. The collar member 443b is provided to the right of the collar member 43a in the vehicle left-right direction. The primary movable sheave 44 is provided on the outer circumferential surfaces of the collar member 43a and the collar member 443b.

A spline 44c on the inner circumferential surface of a slide member 44a of the primary movable sheave 44 is inserted into a slit 444b of the collar member 443b of the primary shaft member 441. The spline 44c is arranged to be movable along the slit 444b in the rotational axis direction of the primary shaft member 241. The primary movable sheave 44 is therefore movable along the slit 444b of the collar member 443b in the rotational axis direction of the primary movable sheave 44. Meanwhile, the spline 44c is arranged to be immovable in the slit 44b in the rotational direction of the primary movable sheave 44. The primary movable sheave 44 therefore rotates together with the crankshaft member 421 and the primary shaft member 441. The spline 44c of the slide member 44a of the primary movable sheave 44 and the slit 444b of the collar member 443b of the primary shaft member 441 directly make contact with each other, when the primary movable sheave 44 is moved by the primary movable sheave movement mechanism 440 in the rotational axis direction of the primary shaft member 441 relative to the primary shaft member 441. To put it differently, the spline 44c of the slide member 44a of the primary movable sheave 44 and the slit 444b of the collar member 443b of the primary shaft member 441 constitute a slide portion 448 between the primary movable sheave 44 and the primary shaft member 241.

The primary movable sheave movement mechanism 440 includes the lubrication chamber forming portion 490. The lubrication chamber forming portion 490 is provided inside the lubrication space 222c. The lubrication chamber forming portion 490 is constituted by the slide member 44a of the primary movable sheave 44, the collar member 443b of the primary shaft member 441, the sealing member 44d, the moving member bearing 75, a female screw 73c of the movable screw part 73a, a male screw 74b of the fixed screw part 74a, and the rotating member bearing 76. The lubrication chamber forming portion 490 forms the lubrication chamber 490a. The lubrication chamber 490a accommodates the slide portion 448 between the primary movable sheave 44 and the primary shaft member 441, which is a portion where the primary movable sheave 44 and the primary shaft member 441 slide with each other when the primary movable sheave 44 is moved by the primary movable sheave movement mechanism 240 in the rotational axis direction of the primary shaft member 441 relative to the primary shaft member 441. The slide portion 448 where the primary movable sheave 44 and the primary shaft member 441 directly make contact with each other and slide with each other corresponds to the spline 44c of the slide member 44a of the primary movable sheave 44 and the slit 444b of the collar member 443b of the primary shaft member 441.

The lubrication chamber forming portion 490 has lubricant injection holes 91 and 291 and a lubricant discharge hole 492. In Specific Example 2, the lubrication chamber forming portion 490 may not have the lubricant injection hole 91.

In the crankshaft member 421 and the primary shaft member 441, the lubricant injection hole 291 and the lubricant discharge hole 492 are formed. The lubricant discharge hole 492 is constituted by oil merging discharge passage members 421a, oil discharge passage members 421b, and oil branching discharge passage members 421c. The number of the oil merging discharge passage members 421a may be one. The number of the oil discharge passage members 421b may be one. The number of the oil branching discharge passage members 421c may be one. The oil merging discharge passage members 421a, the oil discharge passage members 421b, and the oil branching discharge passage members 421c are formed inside the crankshaft member 421 and the primary shaft member 441. The oil merging discharge passage members 421a are provided to extend along the radial direction of the primary shaft member 441. The oil branching discharge passage members 421c are provided to extend along the radial direction of the primary shaft member 441. The oil discharge passage members 421b are provided at the center of the crankshaft member 421 and the primary shaft member 441 and extend along the rotational axis direction of the primary shaft member 441. The right end of each oil discharge passage member 421b is at the crankshaft member 421. The left end of each oil discharge passage member 421b is at the primary shaft member 441 which is to the left of the rotating member bearing 76. When viewed in the rotational axis direction of the primary shaft member 441, the outer end of the oil merging discharge passage member 421a in the radial direction of the primary shaft member 441 is connected to a collar discharge hole portion 443e. When viewed in the rotational axis direction of the primary shaft member 441, the inner end of the oil merging discharge passage member 421a in the radial direction of the primary shaft member 441 is connected to a left end portion of an oil discharge passage member 421b. When viewed in the rotational axis direction of the primary shaft member 441, the outer end of the oil branching discharge passage member 421c in the radial direction of the primary shaft member 441 is connected to a lubrication space 222c. When viewed in the rotational axis direction of the primary shaft member 441, the inner end of the oil branching discharge passage member 421c in the radial direction of the primary shaft member 441 is connected to a right end portion of the oil discharge passage member 421b.

Because the collar hole portions 243d are formed in the collar member 443b, the oil injected from the collar hole portions 243d to the lubrication chamber 490a lubricates the slit 444b of the collar member 443b of the primary shaft member 441. As the slit 444b of the collar member 443b of the primary shaft member 441 is lubricated, the spline 44c of the slide member 44a of the primary movable sheave 44, which is in contact with the slit 444b of the collar member 443b of the primary shaft member 441, is lubricated. The spline 44c of the slide member 44a of the primary movable sheave 44 and the slit 444b of the collar member 443b of the primary shaft member 441 constitute a slide portion 448 between the primary movable sheave 44 and the primary shaft member 441. To put it differently, oil is injected through the lubricant injection hole 291 in order to lubricate the slide portion 448 between the primary movable sheave 44 and the primary shaft member 441.

The female screw 73c of the movable screw part 73a and the male screw 74b of the fixed screw part 74a forming the lubrication chamber forming portion 490 constitute a slide portion 470 that is different from the slide portion 448 between the primary movable sheave 44 and the primary shaft member 441. The slide portion 470 is a portion that is not directly in contact with either the primary shaft member 441 or the primary movable sheave 44, and is a portion where the primary shaft member 441 and the primary movable sheave 44 indirectly make contact with each other through another member and slide with each other. The slide portion 470 is a portion where members that are provided between the primary shaft member 441 and the primary movable sheave 44 and constitute the lubrication chamber forming portion 490 directly make contact with each other and slide with each other when the primary movable sheave 44 is moved by the primary movable sheave movement mechanism 440 in the rotational axis direction of the primary shaft member 441 relative to the primary shaft member 441. The slide portion 470 is lubricated by the oil in the lubrication chamber 490a.

The lubricant discharge hole 492 is arranged to allow oil to flow in the oil merging discharge passage members 421a, the oil discharge passage members 421b, and the oil branching discharge passage members 421c. The oil flowing in the oil merging discharge passage members 421a, the oil discharge passage members 421b, and the oil branching discharge passage members 421c is identical with the oil lubricating the inside of the lubrication space 222c. To be more specific, the lubricant discharge hole 492 is arranged to discharge the oil in the lubrication chamber 490a to the oil merging discharge passage member 421a through the collar discharge hole portion 443e. Furthermore, the lubricant discharge hole 492 is arranged to discharge the oil in the oil merging discharge passage member 421a to the lubrication space 222c through the oil discharge passage member 421b and the oil branching discharge passage member 421c.

In addition to the effects of the engine unit 6 of the above-described embodiment of the present teaching and the effects of the engine unit 106 of Specific Example 1, the engine unit 406 of Specific Example 4 of the embodiment of the present teaching exerts the following effects.

The lubricant injection hole 291 and the lubricant discharge hole 492 are formed to connect the inside of the primary shaft member 441 with the lubrication chamber 490a. The lubricant injection hole 291 formed to connect the inside of the primary shaft member 441 with the lubrication chamber 490a makes it possible to reliably inject lubricant into the lubrication chamber 490a in which the slide portion 448 where the primary movable sheave 44 and the primary shaft member 441 directly make contact with each other and slide with each other is accommodated. The lubricant discharge hole 492 formed to connect the inside of the primary shaft member 441 with the lubrication chamber 490a makes it possible to reliably discharge lubricant from the lubrication chamber 490a in which the slide portion 448 between the primary movable sheave 44 and the primary shaft member 441 is accommodated. With this arrangement, heat generated at the slide portion 448 between the primary movable sheave 44 and the primary shaft member 441 is reliably absorbed by the lubricant in the lubrication chamber 490a and is reliably discharged to the outside of the lubrication chamber 490a together with the lubricant. This makes it possible to further prevent increase in temperature of the slide portion 448 between the primary movable sheave 44 and the primary shaft member 441. Furthermore, the slide portion 448 between the primary movable sheave 44 and the primary shaft member 441 is further reliably lubricated by the lubricant. As a result, a friction state of the slide portion 448 between the primary movable sheave 44 and the primary shaft member 441 accommodated in the lubrication chamber 490a is further stabilized and frictional heat is further suppressed. The temperature around the primary pulley 442 is therefore decreased, and thermal deterioration of the dry belt 32 is suppressed.

### (Specific Example 5)

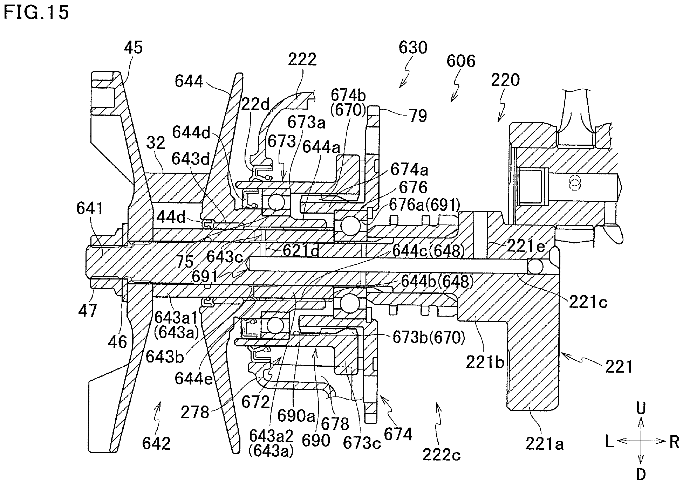

An engine unit 606 of Specific Example 5 will be described with reference to FIG. 15. FIG. 15 shows the engine unit 606 of Specific Example 5, which is partially different from the engine unit 206 of Specific Example 2 shown in FIG. 10. It is noted that items identical with those of the Specific Example 2 shown in FIG. 10 are indicated by the same reference numerals and detailed descriptions thereof are suitably omitted. In FIG. 15, a moving distance detection unit 85 of the engine unit 606 is not shown.

As shown in FIG. 15, the engine unit 606 includes an engine main body unit 620 and an electronically-controlled continuously variable transmission 630.

The electronically-controlled continuously variable transmission 630 includes a primary pulley 642, a secondary pulley (not illustrated), a dry belt 32, a dry belt casing (not illustrated), and a primary movable sheave movement mechanism 640.

The primary pulley 642 is attached to a primary shaft member 641. The primary shaft member 641 is provided at the left end in the vehicle left-right direction of the crankshaft member 221. The primary shaft member 641 is integrally molded with the crankshaft member 221. The primary pulley 642 includes a primary movable sheave 644 and a primary fixed sheave 45. The primary shaft member 641 has, on the outer circumferential surface, a collar member 643a constituted by a collar member 643a1 and a collar member 643a2. The collar member 643a1 is provided to the left of the collar member 643a2. The collar member 643a is formed to be cylindrical in shape. The collar member 643a is fastened to the primary shaft member 641 by a locknut 47 through a spacer 46.

The collar member 643a is arranged to be immovable in the rotational axis direction of the primary shaft member 641 and in the rotational direction of the primary movable sheave 44. A recess 643b is formed between the inner circumferential surface of the collar member 643a and the primary shaft member 641. The collar member 643a2 has a collar hole portion 643c. The collar hole portion 643c formed so that its central axial line penetrates the collar member 643a2 in the radial direction of the primary shaft member 641. The collar member 643a1 may have a collar hole portion 643c. When viewed in the rotational axis direction of the primary shaft member 641, the collar hole portion 643c is arranged so that the outer end in the radial direction of the primary shaft member 641 is connected to a recess 644e formed between the inner circumferential surface of a later-described slide member 644a of the primary movable sheave 644 and the collar member 643a1 whereas the inner end in the radial direction of the primary shaft member 241 is connected to the recess 643b. In the outer circumferential surface of the collar member 643a2, a slit 644b is formed along the rotational axis direction of the primary shaft member 641. The collar member 643a rotates together with the crankshaft member 221 and the primary shaft member 641. The collar member 643a is provided to the right of the primary fixed sheave 45 in the vehicle left-right direction. A recess 644e is formed between the inner circumferential surface of the primary movable sheave 644 and the collar member 643a1. A cylindrical member 643b made of metal is provided on the inner circumferential surface of the primary movable sheave 644. The cylindrical member 643b is provided between the inner circumferential surface of the primary movable sheave 644 and the outer circumferential surface of the collar member 643a1, i.e., between the sealing member 44d and the recess 644e in the rotational axis direction of the primary shaft member 641.

The cylindrical member 643b of the primary movable sheave 644 is inserted into the collar member 643a1 of the primary shaft member 641. The cylindrical member 643b of the primary movable sheave 644 is arranged to be movable in the rotational axis direction of the primary shaft member 641. A spline 644c on the inner circumferential surface of a slide member 644a of the primary movable sheave 644 is inserted into a slit 644b of the collar member 643a2 of the primary shaft member 641. The spline 644c is arranged to be movable along the slit 644b in the rotational axis direction of the primary shaft member 641. The primary movable sheave 644 is therefore movable along the slit 644b of the collar member 643a2 in the rotational axis direction of the primary movable sheave 644. Meanwhile, the spline 644c is arranged to be immovable in the slit 644b in the rotational direction of the primary movable sheave 644. The primary movable sheave 644 therefore rotates together with the crankshaft member 221 and the primary shaft member 641. The spline 644c of the slide member 644a of the primary movable sheave 644 and the slit 644b of the collar member 643a2 of the primary shaft member 641 directly make contact with each other, when the primary movable sheave 644 is moved by the primary movable sheave movement mechanism 640 in the rotational axis direction of the primary shaft member 641 relative to the primary shaft member 641. To put it differently, the spline 644c of the slide member 644a of the primary movable sheave 644 and the slit 644b of the collar member 643a2 of the primary shaft member 641 constitute a slide portion 648 between the primary movable sheave 644 and the primary shaft member 641. The cylindrical member 643b of the primary movable sheave 644 and the collar member 643a1 of the primary shaft member 641 directly make contact with each other, when the primary movable sheave 644 is moved by the primary movable sheave movement mechanism 640 in the rotational axis direction of the primary shaft member 641 relative to the primary shaft member 641. To put it differently, the cylindrical member 643b of the primary movable sheave 644 and the collar member 643a1 of the primary shaft member 641 constitute a slide portion 648 between the primary movable sheave 644 and the primary shaft member 641.

The primary movable sheave movement mechanism 640 includes a rotational force conversion mechanism 672, a rotational force transmission mechanism (not illustrated), and a lubrication chamber forming portion 690.

The rotational force conversion mechanism 672 includes a relative moving member 673 and a rotating member 674. The rotational force conversion mechanism 672 moves the primary movable sheave 644 in the rotational axis direction of the primary shaft member 641. The rotational force conversion mechanism 672 is provided in the lubrication space 222c. The rotating member 674 includes a fixed screw part 674a, a rotating member bearing 676, and a sheave-side gear 79.

The rotating member bearing 676 is fitted with the outer circumferential surface of the primary shaft member 641. The rotating member bearing 676 is provided at the right end of the collar member 643 a of the primary shaft member 641. The fixed screw part 674a is fitted with the outer circumferential surface of the rotating member bearing 676. In other words, the fixed screw part 674a is supported by the primary shaft member 641 through the rotating member bearing 676. The rotating member bearing 676 is provided so that its central axial line extends along the rotational axis direction of the primary shaft member 641. The rotating member bearing 676 includes a cylindrical inner race, a cylindrical outer race provided radially outside the inner race, and rolling bodies provided between the inner race and the outer race. The rotating member bearing 676 has an internal gap 676a between the rolling bodies and the inner race and between the rolling bodies and the outer race. The rotating member bearing 676 is a bearing not including a seal plate. The internal gap 676a is a later-described lubricant discharge hole 692.

The fixed screw part 674a rotates irrespective of the rotation of the primary shaft member 641. The sheave-side gear 79 is fixed to a right end portion of the fixed screw part 674a.

The relative moving member 673 includes a cylindrical movable screw part 673a, a moving member bearing 75, and a rotation stopper 673c. The moving member bearing 75 is fitted with the outer circumferential surface of the right end portion of the slide member 644a of the primary movable sheave 644. The movable screw part 763 a is fitted with the outer circumferential surface of the moving member bearing 75. In other words, the outer circumferential surface of the moving member bearing 75 is provided on the inner circumferential surface of the movable screw part 673 a. The movable screw part 673a is supported by the slide member 644a of the primary movable sheave 644 through the moving member bearing 75. On the outer circumferential surface of a right portion of the movable screw part 673a, the rotation stopper 673c is formed in an integrated manner. An insertion 278 is inserted into the rotation stopper 673c. As the insertion 278 is inserted into the rotation stopper 673c, the relative moving member 673 is not rotatable in the rotational direction of the primary movable sheave 644. In other words, the relative moving member 673 is arranged to be immovable in the rotational direction of the primary movable sheave 644 on account of the rotation stopper 673c. A sealing member 644d is provided between the inner circumferential surface of the movable screw part 763a and the outer circumferential surface of the slide member 644a of the primary movable sheave 644. The sealing member 644d forms a later-described lubrication chamber forming portion 690. A sealing member 22d is provided between the inner circumferential surface of the movable screw part 763a and the crankcase member 222. The sealing member 22d prevents the oil from leaking out from the lubrication space 222c formed by the crankcase member 222 to the dry space 31a.

The relative moving member 673 is in contact with the rotating member 674. In the inner circumferential surface of the movable screw part 673a of the relative moving member 673, a female screw 673b is formed. In the outer circumferential surface of the fixed screw part 674a of the rotating member 674, a male screw 674b is formed. The female screw 673b of the movable screw part 673a and the male screw 674b of the fixed screw part 674a are trapezoidal screws arranged to be engaged with each other. The female screw 673b of the movable screw part 673a and the male screw 674b of the fixed screw part 674a move relative to each other along the rotational axis direction of the primary shaft member 641, when these screws are rotated relative to each other. In other words, the fixed screw part 674a is engaged with and in contact with the movable screw part 673a. The movable screw part 673a and the fixed screw part 674a are in contact with each other at the female screw 673b and the male screw 674b. When the primary movable sheave 644 is moved by the primary movable sheave movement mechanism 640 in the rotational axis direction of the primary shaft member 641 relative to the primary shaft member 641, the female screw 673b of the movable screw part 673a directly makes contact with and slides on the male screw 674b of the fixed screw part 674a. In other words, the female screw 673b of the movable screw part 673a and the male screw 674b of the fixed screw part 674a constitute a slide portion 670 where the primary movable sheave 644 slides on the primary shaft member 641 when the primary movable sheave 644 moves in the rotational axis direction of the primary shaft member 641 relative to the primary shaft member 641. This slide portion 670 is different from the slide portion 648 between the primary movable sheave 644 and the primary shaft member 641. The female screw 673c of the movable screw part 673a and the male screw 674b of the fixed screw part 674a are members that do not directly make contact with the primary shaft member 641 and the primary movable sheave 644 and are provided between the primary shaft member 641 and the primary movable sheave 644. The female screw 673b of the movable screw part 673a and the male screw 674b of the fixed screw part 674a are provided between the slide member 644a of the primary movable sheave 644 and the primary shaft member 641 through the intermediary of the moving member bearing 75 and the rotating member bearing 676. The slide member 644a of the primary movable sheave 644, the moving member bearing 75, the movable screw part 673a, the fixed screw part 674a, and the rotating member bearing 676 constitute a later-described lubrication chamber forming portion 690. The female screw 673b of the movable screw part 673a and the male screw 674b of the fixed screw part 674a are lubricated by oil in a later-described lubrication chamber 690a.

The primary movable sheave movement mechanism 640 includes the lubrication chamber forming portion 690. The lubrication chamber forming portion 690 is provided inside the lubrication space 222c. The lubrication chamber forming portion 690 is constituted by the slide member 644a of the primary movable sheave 644, the collar member 643a of the primary shaft member 641, the sealing members 44d and 644d, the moving member bearing 75, the movable screw part 673a, the fixed screw part 674a, and the rotating member bearing 676. The lubrication chamber forming portion 690 forms the lubrication chamber 690a. The lubrication chamber 690a accommodates the slide portion 648 between the primary movable sheave 644 and the shaft member 641, which is a portion where the primary movable sheave 644 and the primary shaft member 641 slide with each other when the primary movable sheave 644 is moved by the primary movable sheave movement mechanism 640 in the rotational axis direction of the primary shaft member 641 relative to the primary shaft member 641. The slide portion 648 between the primary movable sheave 644 and the primary shaft member 641 corresponds to the spline 644c of the slide member 644a of the primary movable sheave 644, the slit 644b of the collar member 643a2 the primary shaft member 641, the cylindrical member 643b of the primary movable sheave 644, and the collar member 643a1 of the primary shaft member 641.

The lubrication chamber forming portion 690 has a lubricant injection hole 691 and a lubricant discharge hole 692. The lubricant discharge hole 692 is an internal gap 676a in the rotating member bearing 676. The internal gap 676a in the rotating member bearing 676, which is the lubricant discharge hole 692, penetrates the bearing in the rotational axis direction of the primary shaft member 641. Oil can be discharged through the gap 676a in the rotating member bearing 676 which is the lubricant discharge hole 692, in the rotational axis direction of the primary shaft member 641.

The lubricant injection hole 691 is constituted by a crankcase oil passage member 222a, oil passage members 221e and 221c, an oil passage member 621d, a recess 643d, a collar hole portion 643c, and a recess 644e. The crankshaft member 221 and the primary shaft member 641 form the oil passage member 221c therein. The crankshaft member 221 forms the oil passage member 221e therein. The primary shaft member 641 forms the oil passage member 621d therein. The collar member 643a forms the collar hole portion 643c therein, which allows oil to flow therein. The oil passage member 221e is connected to a crankcase oil passage member (not illustrated) in the crankcase member 222. The oil passage member 221c is connected to the oil passage member 221e. The oil passage member 221c is provided at the center of the crankshaft member 221 and the primary shaft member 641 and extends along the rotational axis direction of the primary shaft member 641. The oil passage member 621d is connected to a left end portion of the oil passage member 221c. The oil passage member 621d is provided to extend along the radial direction of the primary shaft member 641. In the radial direction of the primary shaft member 641, the oil passage member 621d extends from the oil passage member 221c at the center of the primary shaft member 641 to the recess 643d formed between the collar member 643a and the primary shaft member 641. The collar hole portion 643c is provided to extend along the radial direction of the primary shaft member 641. In the radial direction of the primary shaft member 641, the collar hole portion 643c extends from the recess 643d formed between the collar member 643a and the primary shaft member 641 to the recess 644e formed between the inner circumferential surface of the slide member 644a and the collar member 643a.

The lubricant injection hole 691 is arranged to allow oil to flow in the crankcase oil passage member 222a, the oil passage members 221e and 221c, the oil passage member 621d, the recess 643d, the collar hole portion 643c, and the recess 644e. The oil flowing in the crankcase oil passage member 222a, the oil passage members 221e and 221c, the oil passage member 621d, the recess 643d, the collar hole portion 643c, and the recess 644e is identical with the oil lubricating the inside of the lubrication space 222c. The lubricant injection hole 691 is arranged to cause oil in a crankcase oil passage member (not illustrated) to flow into an oil passage member 221c. The lubricant injection hole 691 is arranged to allow the oil in the oil passage member 221c to pass through the oil passage members 621d and 643c and to be stored in the recess 644e formed between the inner circumferential surface of the slide member 644a and the collar member 643a. The lubricant injection hole 691 is arranged so that oil stored in the recess 644e flows into the spline 644c of the slide member 644a of the primary movable sheave 644 and a recess of the slit 644b of the collar member 643a2 of the primary shaft member 641 and is then injected into the lubrication chamber 690a. Furthermore, the lubricant injection hole 691 allows the oil stored in the recess 644e to be injected into a gap between the cylindrical member 643b of the primary movable sheave 644 and the collar member 643a1 of the primary shaft member 641. The spline 644c of the slide member 644a of the primary movable sheave 644, the slit 644b of the collar member 643 a2 of the primary shaft member 641, the cylindrical member 643b of the primary movable sheave 644, and the collar member 643a1 of the primary shaft member 641 constitute the slide portion 648 between the primary movable sheave 644 and the primary shaft member 641. To put it differently, oil is injected through the lubricant injection hole 691 in order to lubricate the slide portion 648 between the primary movable sheave 644 and the primary shaft member 641.

The female screw 673b of the movable screw part 673a and the male screw 674b of the fixed screw part 674a forming the lubrication chamber forming portion 690 constitute a slide portion 670 that is different from the slide portion 648 between the primary movable sheave 644 and the primary shaft member 641. The slide portion 670 is a portion that is not directly in contact with either the primary shaft member 641 or the primary movable sheave 644, and is a portion where the primary shaft member 641 and the primary movable sheave 644 indirectly make contact with each other through another member and slide with each other. The slide portion 670 is a portion where members that are provided between the primary shaft member 641 and the primary movable sheave 644 and constitute the lubrication chamber forming portion 690 directly make contact with each other and slide with each other when the primary movable sheave 644 is moved by the primary movable sheave movement mechanism 640 in the rotational axis direction of the primary shaft member 641 relative to the primary shaft member 641. The slide portion 670 is lubricated by the oil in the lubrication chamber 690a.

The engine unit 606 of Specific Example 5 of the embodiment of the present teaching exerts effects similar to those of the engine unit 6 of the embodiment of the present teaching, the engine unit 106 of Specific Example 1, and the engine unit 206 of Specific Example 2, which are described above.

The preferred embodiment of the present teaching has been described above. However, the present teaching is not limited to the above-described embodiment, and various changes can be made within the scope of the claims. Further, modifications described below may be used in combination as needed.

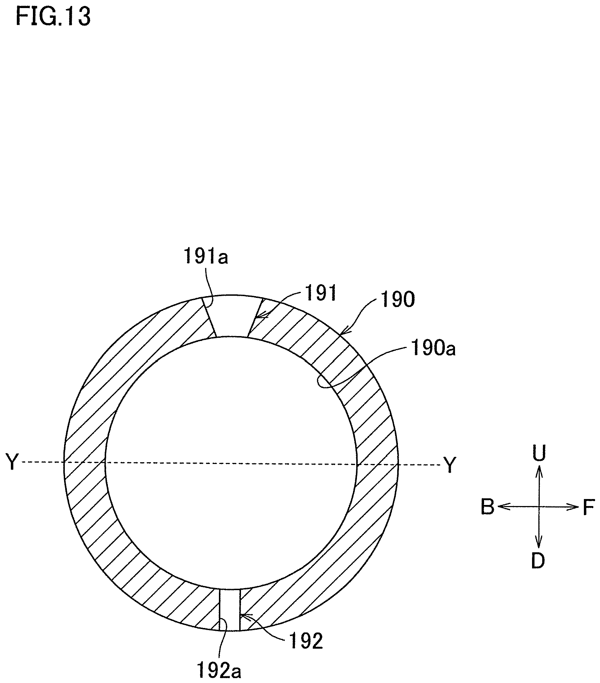

In Specific Example 1 of the embodiment above, as shown in FIG. 7, the lubricant injection hole 91 has a cylindrical outer hole portion 91a and a cylindrical inner hole portion 91b that are different from each other in outer diameter. In this regard, in the present teaching, the lubricant injection hole may have any shape on condition that the size of the open end formed on the outer surface of the lubrication chamber forming portion is larger than the size of the open end formed on the inner surface of the lubrication chamber forming portion. FIG. 13 shows a modification of the lubricant injection hole 91 of Specific Example 1. As shown in FIG. 13, a lubricant injection hole 191 is formed in a lubrication chamber forming portion 190. The lubrication chamber forming portion 190 forms a lubrication chamber 190a therein. The lubricant injection hole 191 is constituted by a tapered hole portion 191a. The hole portion 191a is arranged so that the size of the open end formed on the outer surface of the lubrication chamber forming portion 190 is larger than the size of the open end formed on the inner surface of the lubrication chamber forming portion 190. Injection of the lubricant into the lubrication chamber 190a is further facilitated by this arrangement. The temperature around the primary pulley 42 is therefore decreased, and thermal deterioration of the dry belt 32 is suppressed. The lubricant injection hole may not be arranged so that the size of the open end formed on the outer surface of the lubrication chamber forming portion is larger than the size of the open end formed on the inner surface of the lubrication chamber forming portion.

In Specific Example 1 of the embodiment above, two lubricant discharge holes 92 are provided as shown in FIG. 7. Alternatively, in the present teaching, only one lubricant discharge hole may be provided. In the present teaching, the lubricant discharge hole may be arranged so that the size of the open end formed on the outer surface of the lubrication chamber forming portion is identical with the size of the open end formed on the inner surface of the lubrication chamber forming portion. In Specific Example 1 of the embodiment above, the lubricant discharge hole 92 is arranged so that its central axial line does not extend along the vertical direction as shown in FIG. 7. Alternatively, in the present teaching, the central axial line may be arranged to extend along the vertical direction. FIG. 13 shows a modification of the lubricant discharge hole 92 of Specific Example 1. As shown in FIG. 13, a lubricant discharge hole 192 is formed in a lubrication chamber forming portion 190. The lubricant discharge hole 192 is constituted by a cylindrical hole portion 192a. The hole portion 192a is arranged so that the size of the open end formed on the outer surface of the lubrication chamber forming portion 190 is identical with the size of the open end formed on the inner surface of the lubrication chamber forming portion 190. The lubricant discharge hole 192 is provided so that its central axial line extends along the vertical direction. This further facilitates discharge of the lubricant from the lubrication chamber 190a. In addition, the lubricant flows downward in the vertical direction by the force of gravity. Discharge of the lubricant from the lubrication chamber 190a is further facilitated when the lubricant discharge hole 192 is formed so that its central axial line extends along the vertical direction. The temperature around the primary pulley 42 is therefore decreased, and thermal deterioration of the dry belt 32 is suppressed.

In Specific Example 1 of the embodiment above, the lubricant injection hole 91 is provided so that its central axial line extends along the vertical direction. Alternatively, in the present teaching, the lubricant injection hole may be arranged so that its central axial line does not extend along the vertical direction.

In Specific Examples 1 to 4 of the embodiment above, the lubricant discharge hole 92 is partially provided in a lower portion of the lubrication chamber forming portion 90. Alternatively, in the present teaching, the lubricant discharge hole may be entirely provided in the lower portion of the lubrication chamber forming portion.

While in Specific Examples 1 to 5 of the embodiment the rotating member of the rotational force conversion mechanism is arranged to be immovable in the primary rotational axis direction, the disclosure is not limited to this arrangement. The rotating member of the rotational force conversion mechanism may be arranged to be movable in the primary rotational axis direction.

In Specific Examples 1 to 5 of the embodiment above, the relative moving member and the rotating member of the rotational force conversion mechanism are formed by trapezoidal screws. The disclosure, however, is not limited to this arrangement. The relative moving member and the rotating member may be realized by another screw structure. For example, the relative moving member and the rotating member may be formed by a ball screw and a ball screw shaft engaged with the ball screw. Alternatively, the relative moving member and the rotating member may be formed by a spline shaft having a spiral spline groove and a spline nut fitted with the spline groove.

The electronically-controlled continuously variable transmission may not be structured as described in the specific examples of the embodiment above. The electronically-controlled continuously variable transmission of the present teaching may be one of electronically-controlled continuously variable transmissions with various structures.

While the rotational force transmission mechanism 80 is provided in the lubrication space 22c in the specific examples of the embodiment above, the disclosure is not limited to this arrangement. In the present teaching, the rotational force transmission mechanism may be at least partially provided in the dry space. For example, in the present teaching, an electric motor may be provided in the dry space.

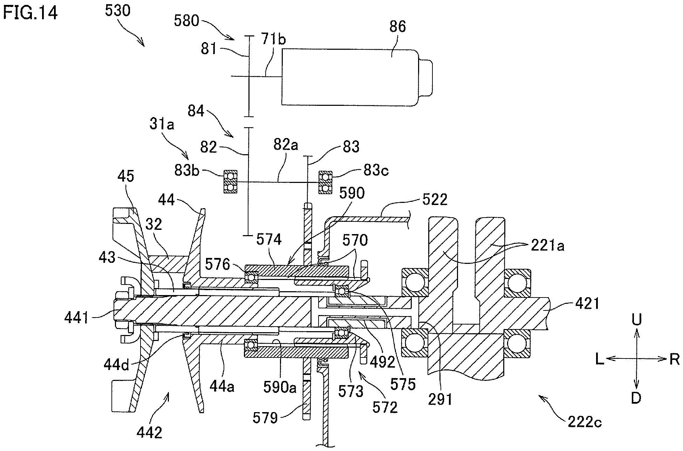

In addition to the above, for example, in the specific examples of the embodiment above, the lubrication chamber forming portion 90 is provided in the lubrication space 22c. Alternatively, in the present teaching, the lubrication chamber forming portion may be at least partially provided in the dry space. The following will describe a modification of the electronically-controlled continuously variable transmission in which the lubrication chamber forming portion is partially provided in the dry space, with reference to FIG. 14. An electronically-controlled continuously variable transmission 530 of the modification shown in FIG. 14 is partially different from the electronically-controlled continuously variable transmission 430 of the engine unit 406 of Specific Example 4 shown in FIG. 12. In FIG. 14, the rotational force transmission mechanism 80 is schematically illustrated.

In the electronically-controlled continuously variable transmission 530 of the modification of FIG. 14, a primary movable sheave movement mechanism 540 includes a rotational force conversion mechanism 572 and a rotational force transmission mechanism 580. The rotational force transmission mechanism 580 includes an electric motor 86, an output gear 81, a rotational force transmission gear 82, a rotational shaft 82a, and a rotating member gear 83. The rotational force transmission mechanism 580 is provided in a dry space 31a. The rotational force conversion mechanism 572 includes a relative moving member 573, a rotating member 574, a moving member bearing 575, and a rotating member bearing 576. On the outer circumferential surface of the rotating member 574, a sheave-side gear 579 is provided to be engaged with a rotating member gear 83. The rotating member 574, the rotating member bearing 576, and the sheave-side gear 579 are provided in the dry space 31a. In the outer circumferential surface of the relative moving member 573 and the inner circumferential surface of the rotating member 574, a male screw and a female screw are formed to constitute a slide portion 570 between the primary movable sheave 44 and the primary shaft member 441. With the outer circumferential surface of a right end portion of the slide member 44a, the rotating member bearing 576 is fitted. With the inner circumferential surface of the rotating member 574, the rotating member bearing 576 is fitted. The relative moving member 573 is arranged not to be rotatable by an unillustrated screw portion, etc. The relative moving member 573 is arranged to be immovable in the rotational axis direction of the primary shaft member 441 by the moving member bearing 575. The rotating member 574 is rotated by the rotational force of the sheave-side gear 579. The rotating member 574 is moved in the rotational axis direction of the primary shaft member 441 by the rotational force of the rotating member 574 itself. In other words, the relative moving member 573 is arranged to be movable relative to the rotating member 574 in the rotational axis direction of the primary shaft member 441. The primary movable sheave 44 moves in the rotational axis direction of the primary shaft member 441 relative to the primary shaft member 441. In the electronically-controlled continuously variable transmission 530 of the modification of FIG. 14, the rotating member bearing 576 is a seal bearing in which a seal plate is provided without forming a gap.

The relative moving member 573, the rotating member 574, and the moving member bearing 575 constitute a lubrication chamber forming portion 590. The lubrication chamber forming portion 590 is partially provided in the dry space 31a and partially provided in the lubrication space 222c. The lubrication chamber forming portion 590 has a lubricant injection hole 291 and a lubricant discharge hole 492. The lubricant injection hole 291 and the lubricant discharge hole 492 are formed in the crankshaft member 421 and the primary shaft member 441 so as to communicate with each other. The lubrication chamber forming portion 590 forms a lubrication chamber 590a therein. The lubrication chamber 590a accommodates the slide portion 448 between the primary movable sheave 44 and the primary shaft member 441, which is a portion where the primary movable sheave 44 and the primary shaft member 441 slide with each other when the primary movable sheave 44 is moved by the primary movable sheave movement mechanism 540 in the rotational axis direction of the primary shaft member 441 relative to the primary shaft member 441. The slide portion 448 between the primary movable sheave 44 and the primary shaft member 441 corresponds to the spline 44c of the slide member 44a of the primary movable sheave 44 and the slit 444b of the collar member 443b of the primary shaft member 441. The moving member bearing 575, the male screw and the female screw formed in the outer circumferential surface of the relative moving member 573 and the inner circumferential surface of the rotating member 574, and the rotating member bearing 576 constitute a lubrication chamber forming chamber 590. The male screw and the female screw formed in the outer circumferential surface of the relative moving member 573 and the inner circumferential surface of the rotating member 574 constitute a slide portion 570 that is different from the slide portion 448 between the primary movable sheave 44 and the primary shaft member 441. The slide portion 570 is a portion that is not directly in contact with either the primary shaft member 441 or the primary movable sheave 44, and is a portion where the primary shaft member 441 and the primary movable sheave 44 indirectly make contact with each other through another member and slide with each other. The slide portion 570 is a portion where members that are provided between the primary shaft member 441 and the primary movable sheave 44 and constitute the lubrication chamber forming portion 590 directly make contact with each other and slide with each other when the primary movable sheave 44 is moved by the primary movable sheave movement mechanism 440 in the rotational axis direction of the primary shaft member 441 relative to the primary shaft member 441. The slide portion 570 is lubricated by the oil in the lubrication chamber 590a.

For example, in the specific examples of the embodiment above, the rotational force transmission gear 82 is the only gear included in the rotational force transmission gear mechanism 84. The disclosure, however, is not limited to this arrangement. In the engine unit of the present teaching, for example, the rotational force transmission gear mechanism may include gears that are different from the rotational force transmission gear.

For example, in the specific examples of the embodiment above, the rotational shaft 86b of the electric motor 86 is not supported by a bearing at an end portion. In this regard, in the engine unit of the present teaching, an end portion of the rotational shaft of the electric motor may be supported by a bearing.

In the specific example of the embodiment above, the crankshaft member 21 and the primary shaft member 41 are integrally molded. The disclosure, however, is not limited to this arrangement. The crankshaft member and the primary shaft member may be molded independently. The crankshaft member and the primary shaft member that are independently molded may be integrated. In this case, the rotational axis of the primary shaft member is provided on the rotational axis of the crankshaft member. The crankshaft member and the primary shaft member that are independently molded may not be integrated. In this case, the rotational axis of the primary shaft member is provided to be in parallel to the rotational axis of the crankshaft member.

In the specific examples of the embodiment above, the moving distance detection unit 85 is a sensor configured to detect the moving distance of the primary movable sheave 44 in its rotational axis direction as the primary movable sheave 44 makes contact with the relative moving member 73 and rotates. In the engine unit of the present teaching, the moving distance detection unit may be a sensor configured to detect the moving distance of the primary movable sheave in its rotational axis direction. For example, the moving distance detection unit may be formed by combining gears and may detect the moving distance of the primary movable sheave in its rotational axis direction, based on the number of rotations of the gears.

The engine main body unit of the engine unit of the present teaching may be mounted on the vehicle body frame such that the cylinder axial line is closer to the up-down direction. The inclination angle of the cylinder axial line with respect to the horizontal direction is 45 degree or more and 90 degrees or less.

The engine main body unit of the engine unit of the present teaching may be a multi-cylinder engine. The engine main body unit of the engine unit of the present teaching may be a two-stroke engine. The engine main body unit of the engine unit of the present teaching may be a natural air-cooled engine. The engine main body unit of the engine unit of the present teaching may be a water-cooled engine. The engine main body unit of the engine unit of the present teaching may be a hybrid engine.

The motorcycle is exemplified as a vehicle to which the engine unit of the present teaching is applied. The vehicle of the present teaching, however, may be any type of vehicle on condition that the vehicle is moved by the power of an engine unit. The vehicle of the present teaching may be a straddled vehicle which is not a motorcycle. A straddled vehicle indicates all types of vehicles on which a rider rides in a manner of straddling a saddle. A straddled vehicle includes motorcycles, tricycles, four-wheeled buggies (ATVs: All Terrain Vehicles), personal water crafts, snowmobiles, and the like. The vehicle to which the present teaching is applied may not be a straddled vehicle. No driver may ride the vehicle to which the present teaching is applied. The vehicle to which the present teaching is applied may be able to run without any occupants.

### [Reference Signs List]

6, 106, 206, 306, 406, 606 engine unit
20, 220, 320, 620 engine main body unit
21, 221, 421 crankshaft member
22, 222, 322 crankcase member
22c, 222c, 322c lubrication space
30, 230, 330, 430, 530, 630 electronically-controlled continuously variable transmission
31 dry belt casing
31a dry space
32 dry belt
32a contact portion
40, 240, 440, 540, 640 primary movable sheave movement mechanism
41, 241, 441, 641 primary shaft member
42, 242, 442, 642 primary pulley
44, 644 primary movable sheave
45 primary fixed sheave
48, 248, 348, 448, 648 slide portion between primary movable sheave and primary shaft member
51 secondary shaft member
52 secondary pulley
75 moving member bearing (bearing)
75a internal gap
76 rotating member bearing (bearing)
76a internal gap
86 electric motor
90, 190, 290, 490, 590, 690 lubrication chamber forming portion
90a, 190a, 290a, 490a, 590a, 690a lubrication chamber
91, 191, 291, 691 lubricant injection hole
92, 92F, 92B, 192, 492, 692 lubricant discharge hole
322a lubricant injector

## Claims

1. An engine unit (6, 106, 206, 306, 406, 606) comprising:
an engine main body unit (20, 220, 320, 620) which includes a crankcase member (22, 222, 322) forming a lubrication space (22c, 222c, 322c) in which lubricant exists and a crankshaft member (21, 221, 421) provided in the lubrication space (22c, 222c, 322c); and
an electronically-controlled continuously variable transmission (30, 230, 330, 430, 530, 630) which includes:
(A) a primary pulley (42, 242, 442, 642) which is attached to a primary shaft member (41, 241, 441, 641) to which power of the crankshaft member (21, 221, 421) is transmitted, is rotatable in accordance with rotation of the crankshaft member (21, 221, 421), and includes a primary movable sheave (44, 644) movable in a rotational axis direction and a sheave (45) movable or immovable in the rotational axis direction;
(B) a secondary pulley (52) which is attached to a secondary shaft member (51) and rotates together with the secondary shaft member (51);
(C) a dry belt (32) which is wound onto the primary pulley (42, 242, 442, 642) and the secondary pulley (52) and has contact portions (32a) where the dry belt (32) is in contact with the primary pulley (42, 242, 442, 642) and the secondary pulley (52), the contact portions (32a) not being lubricated by the lubricant;
(D) a dry belt casing (31) which forms a dry space (31a) in which the primary pulley (42, 242, 442, 642), the secondary pulley (52), and the dry belt (32) are provided; and
(E) a primary movable sheave movement mechanism (40, 240, 440, 540, 640) which includes an electric motor (86), is configured to move the primary movable sheave (44, 644) relative to the primary shaft member (41, 241, 441, 641) in the rotational axis direction of the primary shaft member (41, 241, 441, 641), by using rotational force of the electric motor (86), and includes a lubrication chamber forming portion (90, 190, 290, 490, 590, 690) that forms a lubrication chamber (90a, 190a, 290a, 490a, 590a, 690a) accommodating a slide portion (48, 248, 348, 448, 648) between the primary movable sheave (44, 644) and the primary shaft member (41, 241, 441, 641), which is a portion where the primary movable sheave (44, 644) and the primary shaft member (41, 241, 441, 641) slide with each other when the primary movable sheave (44, 644) is moved by the primary movable sheave movement mechanism (40, 240, 440, 540, 640) in the rotational axis direction of the primary shaft member (41, 241, 441, 641) relative to the primary shaft member (41, 241, 441, 641),
**characterized in that** the lubrication chamber forming portion (90, 190, 290, 490, 590, 690) having a lubricant injection hole (91, 191, 291, 691) that allows the lubricant to be injected into the lubrication chamber (90a, 190a, 290a, 490a, 590a, 690a) in order to lubricate the slide portion (48, 248, 348, 448, 648) and a lubricant discharge hole (92, 92F, 92B, 192, 492, 692) that allows the lubricant to be discharged from the lubrication chamber (90a, 190a, 290a, 490a, 590a, 690a).

2. The engine unit (6, 106, 206, 306, 406, 606) according to claim 1, wherein
the lubrication chamber forming portion (90, 190, 290, 490, 590, 690) is provided inside the lubrication space (22c, 222c, 322c) formed by the crankcase member (22, 222, 322), and
the lubricant injected into the lubrication chamber (90a, 190a, 290a, 490a, 590a, 690a) is identical with the lubricant existing in the lubrication space (22c, 222c, 322c) formed by the crankcase member (22, 222, 322).

3. The engine unit (306) according to claim 2, further comprising a lubricant injector (322a) which is configured to either inject the lubricant toward the lubricant injection hole (91) or inject the lubricant such that the lubricant collides with a wall surface of the crankcase member (322) so as to be supplied to the lubricant injection hole (91).

4. The engine unit (6, 106, 206, 306, 406) according to claim 2 or 3, wherein the lubricant injection hole (91, 191) is provided at an upper portion of the lubrication chamber forming portion (90, 190).

5. The engine unit (6, 106, 206, 306, 406) according to claim 4, wherein the lubricant injection hole (91, 191) is arranged so that an open end formed in an outer surface of the lubrication chamber forming portion (90, 190, 290, 490) is larger in size than an open end formed in an inner surface of the lubrication chamber forming portion (90, 190, 290, 490).

6. The engine unit (406) according to claim 2, wherein the lubricant injection hole (291) is formed to connect the inside of the primary shaft member (241) with the lubrication chamber (290a).

7. The engine unit (6, 106, 206, 306, 406) according to any one of claims 3 to 6, wherein the lubricant injection hole (91, 191) is formed to have a central axial line extending along a radial direction of the primary shaft member (41, 241).

8. The engine unit (6, 106, 206, 306, 406, 606) according to any one of claims 3 to 7, wherein
the lubrication chamber forming portion (90, 190, 290, 490, 590) includes a bearing (75, 676) attached to the primary shaft member (41, 241, 441),
the bearing (75, 676) includes a cylindrical inner race attached to the primary shaft member (41, 241, 441), a cylindrical outer race provided outside the inner race in the radial direction, and rolling bodies provided between the inner race and the outer race, a seal plate being provided on none of surfaces of the bearing in the rotational axis direction of the primary shaft member (41, 241, 441), and
the lubricant discharge hole (92, 692) is an internal gap (75a, 676a) formed between the rolling bodies and the inner race and between the rolling bodies and the outer race in the bearing (75, 676).

9. The engine unit (6, 106, 206, 306, 406, 606) according to claim 2 or 3, wherein the lubricant discharge hole (92, 92F, 92B, 192, 492, 692) is provided at a lower portion of the lubrication chamber forming portion (90, 190, 290, 490, 590, 690).

10. The engine unit (6, 106, 206, 306, 406, 606) according to claim 9, wherein the lubricant discharge hole is formed to have a central axial line extending along a vertical direction.

11. The engine unit according to claim 9, wherein the lubricant discharge hole (192) is formed to have a central axial line not extending along a vertical direction.

12. The engine unit according to any one of claims 9 to 11, wherein the lubricant discharge hole (192) is arranged so that an open end formed in an outer surface of the lubrication chamber forming portion is identical in size with an open end formed in an inner surface of the lubrication chamber forming portion.

13. The engine unit according to claim 1, wherein the lubricant injection hole (291) and the lubricant discharge hole (492) are formed to connect the inside of the primary shaft member (441) with the lubrication chamber (590a).

14. The engine unit (6, 106, 206, 306, 406, 606) according to any one of claims 9 to 13, wherein
the lubrication chamber forming portion (90, 190, 290, 490, 590) includes a seal bearing (75, 76) attached to the primary shaft member (41, 241, 441), and
in the seal bearing (75, 76), a seal plate is provided on at least one of surfaces in the rotational axis direction of the primary shaft member (41, 241, 441).

15. The engine unit (6, 106, 206, 306, 406, 606) according to claim 14, wherein, in the seal bearing (75, 76), the seal plate is provided so that a gap is formed.

## Patentansprüche

1. Eine Motoreinheit (6, 106, 206, 306, 406, 606), die folgende Merkmale aufweist:
eine Motorhauptkörpereinheit (20, 220, 320, 620), die ein Kurbelgehäusebauglied (22, 222, 322), das einen Schmierungsraum (22c, 222c, 322c) aufweist, in dem ein Schmiermittel vorhanden ist, und ein Kurbelwellenbauglied (21, 221, 421) umfasst, das in dem Schmierungsraum (22c, 222c, 322c) bereitgestellt ist; und
ein elektronisch gesteuertes stufenloses Getriebe (30, 230, 330, 430, 530, 630), das folgende Merkmale umfasst:
(A) eine Hauptrolle (42, 242, 442, 642), welche an einem Hauptwellenbauglied (41, 241, 441, 641) angebracht ist, an das Leistung des Kurbelwellenbauglieds (21, 221, 421) übertragen wird, welche gemäß einer Drehung des Kurbelwellenbauglieds (21, 221, 421) drehbar ist und welche eine bewegliche Hauptscheibe (44, 644), die in einer Drehachsenrichtung beweglich ist, und eine Scheibe (45) umfasst, die in der Drehachsenrichtung beweglich oder unbeweglich ist;
(B) eine sekundäre Rolle (52), die an einem sekundären Wellenbauglied (51) angebracht ist und sich gemeinsam mit dem sekundären Wellenbauglied (51) dreht;
(C) einen Trockenriemen (32), der auf die Hauptrolle (42, 242, 442, 642) und die sekundäre Rolle (52) gewickelt ist und Kontaktabschnitte (32a) aufweist, wo der Trockenriemen (32) in Kontakt mit der Hauptrolle (42, 242, 442, 642) und der sekundären Rolle (52) ist, wobei die Kontaktabschnitte (32a) nicht durch das Schmiermittel geschmiert werden;
(D) ein Trockenriemengehäuse (31), das einen Trockenraum (31a) bildet, in dem die Hauptrolle (42, 242, 442, 642), die sekundäre Rolle (52) und der Trockenriemen (32) bereitgestellt sind; und
(E) einen Bewegliche-Hauptscheibe-Bewegungsmechanismus (40, 240, 440, 540, 640), der einen Elektromotor (86), der dazu konfiguriert ist, die bewegliche Hauptscheibe (44, 644) relativ zu dem Hauptwellenbauglied (41, 241, 441, 641) in der Drehachsenrichtung des Hauptwellenbauglieds (41, 241, 441, 641) zu bewegen, durch die Verwendung einer Drehkraft des Elektromotors (86), und einen Schmierungskammerbildungsabschnitt (90, 190, 290, 490, 590, 690) umfasst, der eine Schmierungskammer (90a, 190a, 290a, 490a, 590a, 690a) bildet, die einen Gleitabschnitt (48, 248, 348, 448, 648) zwischen der beweglichen Hauptscheibe (44, 644) und dem Hauptwellenbauglied (41, 241, 441, 641) beherbergt, welcher ein Abschnitt ist, an dem die bewegliche Hauptscheibe (44, 644) und das Hauptwellenbauglied (41, 241, 441, 641) miteinander gleiten, wenn die bewegliche Hauptscheibe (44, 644) durch den Bewegliche-Hauptscheibe-Bewegungsmechanismus (40, 240, 440, 540, 640) in der Drehachsenrichtung des Hauptwellenbauglieds (41, 241, 441, 641) relativ zu dem Hauptwellenbauglied (41, 241, 441, 641) bewegt wird,
**dadurch gekennzeichnet, dass** der Schmierungskammerbildungsabschnitt (90, 190, 290, 490, 590, 690) ein Schmiermitteleinspritzloch (91, 191, 291, 691), das es ermöglicht, dass das Schmiermittel in die Schmierungskammer (90a, 190a, 290a, 490a, 590a, 690a) eingespritzt wird, um den Gleitabschnitt (48, 248, 348, 448, 648) zu schmieren, und ein Schmiermittelabgabeloch (92, 92F, 92B, 192, 492, 692) aufweist, das es ermöglicht, dass das Schmiermittel aus der Schmierungskammer (90a, 190a, 290a, 490a, 590a, 690a) abgegeben wird.

2. Die Motoreinheit (6, 106, 206, 306, 406, 606) gemäß Anspruch 1, wobei
der Schmierungskammerbildungsabschnitt (90, 190, 290, 490, 590, 690) in dem Schmierungsraum (22c, 222c, 322c) bereitgestellt ist, der durch das Kurbelgehäusebauglied (22, 222, 322) gebildet ist, und
das Schmiermittel, das in die Schmierungskammer (90a, 190a, 290a, 490a, 590a, 690a) eingespritzt wird, identisch mit dem Schmiermittel ist, das in dem Schmierungsraum (22c, 222c, 322c) vorhanden ist, der durch das Kurbelgehäusebauglied (22, 222, 322) gebildet ist.

3. Die Motoreinheit (306) gemäß Anspruch 2, die ferner einen Schmiermitteleinspritzer (322a) aufweist, der dazu konfiguriert ist, das Schmiermittel entweder hin zu dem Schmiermitteleinspritzloch (91) einzuspritzen oder das Schmiermittel derart einzuspritzen, dass das Schmiermittel mit einer Wandoberfläche des Kurbelgehäusebauglieds (322) kollidiert, um dem Schmiermitteleinspritzloch (91) zugeführt zu werden.

4. Die Motoreinheit (6, 106, 206, 306, 406) gemäß Anspruch 2 oder 3, wobei das Schmiermitteleinspritzloch (91, 191) an einem oberen Abschnitt des Schmierungskammerbildungsabschnitts (90, 190) bereitgestellt ist.

5. Die Motoreinheit (6, 106, 206, 306, 406) gemäß Anspruch 4, wobei das Schmiermitteleinspritzloch (91, 191) so angeordnet ist, dass ein offenes Ende, das in einer Au-βenoberfläche des Schmierungskammerbildungsabschnitts (90, 190, 290, 490) gebildet ist, größer ist als ein offenes Ende, das in einer Innenoberfläche des Schmierungskammerbildungsabschnitts (90, 190, 290, 490) gebildet ist.

6. Die Motoreinheit (406) gemäß Anspruch 2, wobei das Schmiermitteleinspritzloch (291) dazu gebildet ist, das Innere des Hauptwellenbauglieds (241) mit der Schmierungskammer (290a) zu verbinden.

7. Die Motoreinheit (6, 106, 206, 306, 406) gemäß einem der Ansprüche 3 bis 6, wobei das Schmiermitteleinspritzloch (91, 191) dazu gebildet ist, eine Mittelachsenlinie aufzuweisen, die sich entlang einer Radialrichtung des Hauptwellenbauglieds (41, 241) erstreckt.

8. Die Motoreinheit (6, 106, 206, 306, 406, 606) gemäß einem der Ansprüche 3 bis 7, wobei
der Schmierungskammerbildungsabschnitt (90, 190, 290, 490, 590) ein Lager (75, 676) umfasst, das an dem Hauptwellenbauglied (41, 241, 441) angebracht ist,
wobei das Lager (75, 676) einen zylindrischen Innenlaufabschnitt, der an dem Hauptwellenbauglied (41, 241, 441) angebracht ist, einen zylindrischen Außenlaufabschnitt, der außerhalb des Innenlaufabschnitts in der Radialrichtung bereitgestellt ist, und Rollkörper umfasst, die zwischen dem Innenlaufabschnitt und dem Außenlaufabschnitt bereitgestellt sind, wobei eine Dichtungsplatte auf keiner von Oberflächen der Lager in der Drehachsenrichtung des Hauptwellenbauglieds (41, 241, 441) bereitgestellt ist, und
das Schmiermittelabgabeloch (92, 692) ein Innenzwischenraum (75a, 676a) ist, der zwischen den Rollkörpern und dem Innenlaufabschnitt und zwischen den Rollkörpern und dem Außenlaufabschnitt in dem Lager (75, 676) gebildet ist.

9. Die Motoreinheit (6, 106, 206, 306, 406, 606) gemäß Anspruch 2 oder 3, wobei das Schmiermittelabgabeloch (92, 92F, 92B, 192, 492, 692) an einem unteren Abschnitt des Schmierungskammerbildungsabschnitts (90, 190, 290, 490, 590, 690) gebildet ist.

10. Die Motoreinheit (6, 106, 206, 306, 406, 606) gemäß Anspruch 9, wobei das Schmiermittelabgabeloch dazu gebildet ist, eine Mittelachsenlinie aufzuweisen, die sich entlang einer Vertikalrichtung erstreckt.

11. Die Motoreinheit gemäß Anspruch 9, wobei das Schmiermittelabgabeloch (192) dazu gebildet ist, Mittelachsenlinie aufzuweisen, die sich nicht entlang einer vertikalen Richtung erstreckt.

12. Die Motoreinheit gemäß einem der Ansprüche 9 bis 11, wobei das Schmiermittelabgabeloch (192) so angeordnet ist, dass ein offenes Ende, das in einer Außenoberfläche des Schmierungskammerbildungsabschnitts gebildet ist, eine identische Größe wie ein offenes Ende aufweist, das in einer Innenoberfläche des Schmierungskammerbildungsabschnitts gebildet ist.

13. Die Motoreinheit gemäß Anspruch 1, wobei das Schmiermitteleinspritzloch (291) und das Schmiermittelabgabeloch (492) dazu gebildet sind, das Innere des Hauptwellenbauglieds (441) mit der Schmierungskammer (590a) zu verbinden.

14. Die Motoreinheit (6, 106, 206, 306, 406, 606) gemäß einem der Ansprüche 9 bis 13, wobei
der Schmierungskammerbildungsabschnitt (90, 190, 290, 490, 590) ein Dichtungslager (75, 76) umfasst, das an dem Hauptwellenbauglied (41, 241, 441) angebracht ist, und
in dem Dichtungslager (75, 76) eine Dichtungsplatte auf zumindest einer von Oberflächen in der Drehachsenrichtung des Hauptwellenbauglieds (41, 241, 441) bereitgestellt ist.

15. Die Motoreinheit (6, 106, 206, 306, 406, 606) gemäß Anspruch 14, wobei in dem Dichtungslager (75, 76) die Dichtungsplatte bereitgestellt ist, so dass ein Zwischenraum gebildet ist.

## Revendications

1. Unité de moteur (6, 106, 206, 306, 406, 606), comprenant:
une unité de corps principal de moteur (20, 220, 320, 620) qui comporte un élément de carter (22, 222, 322) formant un espace de lubrification (22c, 222c, 322c) dans lequel existe du lubrifiant et un élément de vilebrequin (21, 221, 421) prévu dans l'espace de lubrification (22c, 222c, 322c); et
une transmission variable en continu commandée de manière électronique (30, 230, 330, 430, 530, 630) qui comporte:
(A) une poulie primaire (42, 242, 442, 642), qui est fixée à un élément d'arbre primaire (41, 241, 441, 641) auquel est transmise la puissance de l'élément de vilebrequin (21, 221, 421), est rotative selon la rotation de l'élément de vilebrequin (21, 221, 421) et comporte une poulie mobile primaire (44, 644) mobile dans une direction de l'axe de rotation et une poulie (45) mobile ou immobile dans la direction de l'axe de rotation;
(B) une poulie secondaire (52) qui est fixée à un élément d'arbre secondaire (51) et qui tourne ensemble avec l'élément d'arbre secondaire (51);
(C) une courroie sèche (32) qui est enroulée sur la poulie primaire (42, 242, 442, 642) et la poulie secondaire (52) et qui présente des parties de contact (32a) là où la courroie sèche (32) est en contact avec la poulie primaire poulie (42, 242, 442, 642) et la poulie secondaire (52), les parties de contact (32a) n'étant pas lubrifiées par le lubrifiant;
(D) un boîtier de courroie sèche (31) qui forme un espace sec (31a) dans lequel sont prévues la poulie primaire (42, 242, 442, 642), la poulie secondaire (52) et la courroie sèche (32); et
(E) un mécanisme de déplacement de poulie mobile primaire (40, 240, 440, 540, 640) qui comporte un moteur électrique (86), est configuré pour déplacer la poulie mobile primaire (44, 644) par rapport à l'élément d'arbre primaire (41 , 241, 441, 641) dans la direction de l'axe de rotation de l'élément d'arbre primaire (41, 241, 441, 641), à l'aide de la force de rotation du moteur électrique (86), et comporte une partie formant chambre de lubrification (90, 190, 290, 490, 590, 690) qui forme une chambre de lubrification (90a, 190a, 290a, 490a, 590a, 690a) abritant une partie coulissante (48, 248, 348, 448, 648) entre la poulie mobile primaire (44, 644) et l'élément d'arbre primaire (41, 241, 441, 641), qui est une partie où la poulie mobile primaire (44, 644) et l'élément d'arbre primaire (41, 241, 441, 641) coulissent l'un avec l'autre lorsque la poulie mobile primaire (44, 644) est déplacée par le mécanisme de déplacement de poulie mobile primaire (40, 240, 440, 540, 640) dans la direction de l'axe de rotation de l'élément d'arbre primaire (41, 241, 441, 641) par rapport à l'élément d'arbre primaire (41, 241, 441, 641),
**caractérisée par le fait que** la partie formant chambre de lubrification (90, 190, 290, 490, 590, 690) présente un trou d'injection de lubrifiant (91, 191, 291, 691) qui permet au lubrifiant d'être injecté dans la chambre de lubrification (90a, 190a, 290a, 490a, 590a, 690a) pour lubrifier la partie coulissante (48, 248, 348, 448, 648) et un trou d'évacuation de lubrifiant (92, 92F, 92B, 192, 492, 692) qui permet au lubrifiant d'être évacué de la chambre de lubrification (90a, 190a, 290a, 490a, 590a, 690a).

2. Unité de moteur (6, 106, 206, 306, 406, 606) selon la revendication 1, dans laquelle
la partie formant chambre de lubrification (90, 190, 290, 490, 590, 690) est prévue à l'intérieur de l'espace de lubrification (22c, 222c, 322c) formé par l'élément de carter (22, 222, 322), et
le lubrifiant injecté dans la chambre de lubrification (90a, 190a, 290a, 490a, 590a, 690a) est identique au lubrifiant existant dans l'espace de lubrification (22c, 222c, 322c) formé par l'élément de carter (22, 222, 322).

3. Unité de moteur (306) selon la revendication 2, comprenant par ailleurs un injecteur de lubrifiant (322a) qui est configuré soit pour injecter le lubrifiant vers le trou d'injection de lubrifiant (91), soit pour injecter le lubrifiant de sorte que le lubrifiant entre en collision avec une surface de paroi de l'élément de carter (322) de manière à être alimenté vers le trou d'injection de lubrifiant (91).

4. Unité de moteur (6, 106, 206, 306, 406) selon la revendication 2 ou 3, dans laquelle le trou d'injection de lubrifiant (91, 191) est prévu au niveau d'une partie supérieure de la partie formant chambre de lubrification (90, 190).

5. Unité de moteur (6, 106, 206, 306, 406) selon la revendication 4, dans laquelle le trou d'injection de lubrifiant (91, 191) est disposé de sorte qu'une extrémité ouverte formée dans une surface extérieure de la partie formant chambre de lubrification (90, 190, 290, 490) soit de grandeur plus grande qu'une extrémité ouverte formée dans une surface intérieure de la partie de formation de chambre de lubrification (90, 190, 290, 490).

6. Unité de moteur (406) selon la revendication 2, dans laquelle le trou d'injection de lubrifiant (291) est formé de manière à connecter l'intérieur de l'élément d'arbre primaire (241) avec la chambre de lubrification (290a).

7. Unité de moteur (6, 106, 206, 306, 406) selon l'une quelconque des revendications 3 à 6, dans laquelle le trou d'injection de lubrifiant (91, 191) est formé de manière à présenter une ligne axiale centrale s'étendant dans une direction radiale de l'élément d'arbre primaire (41, 241).

8. Unité de moteur (6, 106, 206, 306, 406, 606) selon l'une quelconque des revendications 3 à 7, dans laquelle
la partie formant chambre de lubrification (90, 190, 290, 490, 590) comporte un palier (75, 676) fixé à l'élément d'arbre primaire (41, 241, 441),
le palier (75, 676) comporte une bague intérieure cylindrique fixée à l'élément d'arbre primaire (41, 241, 441), une bague extérieure cylindrique prévue à l'extérieur de la bague intérieure dans la direction radiale, et des corps roulants prévus entre la bague intérieure et la bague extérieure, une plaque d'étanchéité n'étant prévue sur aucune des surfaces du palier dans la direction de l'axe de rotation de l'élément d'arbre primaire (41, 241, 441), et
le trou d'évacuation de lubrifiant (92, 692) est un espace interne (75a, 676a) formé entre les corps roulants et la bague intérieure et entre les corps roulants et la bague extérieure dans le palier (75, 676).

9. Unité de moteur (6, 106, 206, 306, 406, 606) selon la revendication 2 ou 3, dans laquelle le trou d'évacuation de lubrifiant (92, 92F, 92B, 192, 492, 692) est prévu au niveau d'une partie inférieure de la partie formant chambre de lubrification (90, 190, 290, 490, 590, 690).

10. Unité de moteur (6, 106, 206, 306, 406, 606) selon la revendication 9, dans laquelle le trou d'évacuation de lubrifiant est formé de manière à présenter une ligne axiale centrale s'étendant dans une direction verticale.

11. Unité de moteur selon la revendication 9, dans laquelle le trou d'évacuation de lubrifiant (192) est formé de manière à présenter une ligne axiale centrale ne s'étendant pas dans une direction verticale.

12. Unité de moteur selon l'une quelconque des revendications 9 à 11, dans laquelle le trou d'évacuation de lubrifiant (192) est disposé de sorte qu'une extrémité ouverte formée dans une surface extérieure de la partie formant chambre de lubrification soit de grandeur identique à une extrémité ouverte formée dans une surface intérieure de la partie formant chambre de lubrification.

13. Unité de moteur selon la revendication 1, dans laquelle le trou d'injection de lubrifiant (291) et le trou d'évacuation de lubrifiant (492) sont formés de manière à connecter l'intérieur de l'élément d'arbre primaire (441) avec la chambre de lubrification (590a).

14. Unité de moteur (6, 106, 206, 306, 406, 606) selon l'une quelconque des revendications 9 à 13, dans laquelle
la partie de formation de chambre de lubrification (90, 190, 290, 490, 590) comporte un palier d'étanchéité (75, 76) fixé à l'élément d'arbre primaire (41, 241, 441), et
dans le palier d'étanchéité (75, 76), une plaque d'étanchéité est prévue sur au moins l'une des surfaces dans la direction de l'axe de rotation de l'élément d'arbre primaire (41, 241, 441).

15. Unité de moteur (6, 106, 206, 306, 406, 606) selon la revendication 14, dans laquelle, dans le palier d'étanchéité (75, 76), la plaque d'étanchéité est prévue de sorte que soit formé un espace.
